(19) Europäisches Patentamt
European Patent Office
Office européen des brevets

(11) EP 4 610 982 A1

(12) EUROPEAN PATENT APPLICATION
published in accordance with Art. 153(4) EPC

(43) Date of publication:
**03.09.2025 Bulletin 2025/36**

(21) Application number: **23882276.1**

(22) Date of filing: **13.09.2023**

(51) International Patent Classification (IPC):
***G11B 7/0045*** *(2006.01)* ***B41J 2/47*** *(2006.01)*
***B41J 2/475*** *(2006.01)* ***B42D 25/21*** *(2014.01)*
***B42D 25/41*** *(2014.01)* ***G03F 7/20*** *(2006.01)*
***G11B 7/0033*** *(2006.01)* ***G11B 7/126*** *(2012.01)*
***G11B 7/1263*** *(2012.01)* ***G11B 7/135*** *(2012.01)*
***G11B 7/1362*** *(2012.01)* ***G11B 7/24012*** *(2013.01)*
***G11B 7/24041*** *(2013.01)* ***G11B 7/24094*** *(2013.01)*
***G11B 7/244*** *(2006.01)*

(52) Cooperative Patent Classification (CPC):
**B41M 5/34; B41J 2/47; B41J 2/475; B42D 25/21; B42D 25/41; G03F 7/20; G11B 7/0033; G11B 7/0045; G11B 7/126; G11B 7/1263; G11B 7/135; G11B 7/1362; G11B 7/24012; G11B 7/24041; G11B 7/24094;** (Cont.)

(86) International application number:
**PCT/JP2023/033411**

(87) International publication number:
**WO 2024/090063 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.10.2022 JP 2022171761**

(71) Applicant: **Sony Group Corporation**
**Tokyo 108-0075 (JP)**

(72) Inventors:
- **KURIHARA, Kenichi**
**Tokyo 108-0075 (JP)**
- **ASAOKA, Satoko**
**Tokyo 108-0075 (JP)**
- **TAKAHASHI, Isao**
**Tokyo 108-0075 (JP)**
- **SATO, Hideki**
**Tokyo 108-0075 (JP)**
- **NOMURA, Eiji**
**Tokyo 108-0075 (JP)**

(74) Representative: **D Young & Co LLP**
**3 Noble Street**
**London EC2V 7BQ (GB)**

# (54) DRAWING DEVICE AND METHOD FOR FORMING DRAWN OBJECT

(57) A drawing apparatus according to an aspect of the present disclosure includes a light source section and a scanning section. The scanning section irradiates a surface of the recording medium with a plurality of laser beams generated by the light source section. The light source section generates at least one laser beam among the plurality of laser beams to cause a beam shape of each of the laser beams at a position of the recording medium to satisfy a relational expression below, and to cause a length of the beam shape in a direction parallel to a scanning direction of the laser beams to be 0 degrees or more and 20 degrees or less with respect to the scanning direction of the laser beams:

$$Ly \times 1.1 \leq Lx < Ly \times 5.0$$

$$d \times 0.8 \leq Ly \leq d \times 1.3$$

Lx: Length of the beam shape in a direction parallel to the scanning direction of the laser beams
Ly: Length of the beam shape in a direction orthogonal to the scanning direction of the laser beams
d: Pixel size.

EP 4 610 982 A1

[ FIG. 20 ]

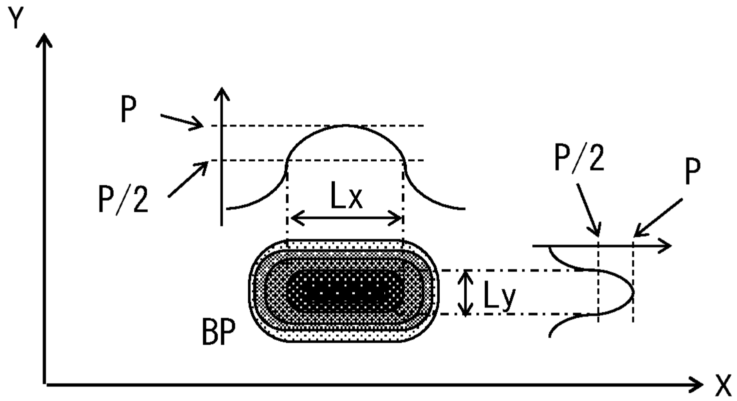


(52) Cooperative Patent Classification (CPC): (Cont.)
**G11B 7/244**

## Description

Technical Field

The present disclosure relates to a drawing apparatus and a method of forming a drawn object.

Background Art

In recent years, to improve security, it has been considered to provide a recording medium that allows any image to be drawn in a non-contact manner inside various ID cards, such as a passport or a driver's license. Currently, a dominant recording medium commercialized for such an application is a recording medium that allows drawing in a single color. It is to be noted that, for example, Patent Literatures 1 to 3 each disclose a technique for drawing an image on a recording medium using a laser beam.

Citation List

Patent Literature

Patent Literature 1: Japanese Unexamined Patent Application Publication No. 2010-192015

Patent Literature 2: Japanese Unexamined Patent Application Publication No. 2005-144952

Patent Literature 3: Japanese Unexamined Patent Application Publication No. Hei 5-292274

Summary of the Invention

Meanwhile, for further improvement of security, colorization of a recording medium is expected. However, colorizing a recording medium has a difficulty in image quality or drawing tact time that is inferior to that of an existing inkjet method or a thermal transfer method. Therefore, it is desirable to provide a drawing apparatus and a method of forming a drawn object that allow achieving a balance between high image quality and short takt time,.

A drawing apparatus according to a first aspect of the present disclosure is a drawing apparatus that performs drawing on a recording medium in which a plurality of coloring layers is stacked via an intermediate layer, the plurality of coloring layers each including a coloring compound different from each other and a photothermal conversion agent different from each other. The drawing apparatus includes a light source section and a scanning section. The light source section generates a plurality of laser beams each having a wavelength different from each other, the wavelength corresponding to an absorption wavelength of the photothermal conversion agent. The scanning section irradiates a surface of the recording medium with the plurality of laser beams generated by the light source section, the scanning section also scanning the plurality of laser beams on the surface of the recording medium. The light source section generates at least one laser beam among the plurality of laser beams to cause a beam shape of the at least one laser beam at a position of the recording medium to satisfy a relational expression below, and to cause a length of the beam shape in a direction parallel to a scanning direction of the laser beams to be 0 degrees or more and 20 degrees or less with respect to the scanning direction of the laser beams:

(Expression)

$$Ly \times 1.1 \leq Lx < Ly \times 5.0$$

$$d \times 0.8 \leq Ly \leq d \times 1.3$$

Lx: Length of the beam shape in a direction parallel to the scanning direction of the laser beams
Ly: Length of the beam shape in a direction orthogonal to the scanning direction of the laser beams
d: Pixel size.

A method of forming a drawn object according to a second aspect of the present disclosure is a method of forming a drawn object by performing drawing on a recording medium in which a plurality of coloring layers is stacked via an

intermediate layer, the plurality of coloring layers each including a coloring compound different from each other and a photothermal conversion agent different from each other. The method includes the following:

(A1) generating a plurality of laser beams each having a wavelength different from each other, the wavelength corresponding to an absorption wavelength of the photothermal conversion agent;
(A2) performing drawing on the recording medium by irradiating a surface of the recording medium with the plurality of laser beams generated by the light source section and also by scanning the plurality of laser beams over the surface of the recording medium; and
(A3) the generating of the plurality of laser beams including generating at least one laser beam among the plurality of laser beams to cause a beam shape of the at least one laser beam at a position of the recording medium to satisfy a relational expression below, and to cause a length of the beam shape in a direction parallel to a scanning direction of the laser beams to be 0 degrees or more and 20 degrees or less with respect to the scanning direction of the laser beams:

(Expression)

$$Ly \times 1.1 \leq Lx < Ly \times 5.0$$

$$d \times 0.8 \leq Ly \leq d \times 1.3$$

Lx: Length of the beam shape in a direction parallel to the scanning direction of the laser beams

Ly: Length of the beam shape in a direction orthogonal to the scanning direction of the laser beams

d: Pixel size.

In a drawing apparatus according to a first aspect of the present disclosure and a method of forming a drawn object according to a second aspect of the present disclosure, at least one laser beam among a plurality of laser beams is generated to cause a beam shape of each of the laser beams at a position of the recording medium to satisfy the above relational expression, and to cause a length of the beam shape in a direction parallel to a scanning direction of the laser beams to be 0 degrees or more and 20 degrees or less with respect to the scanning direction of the laser beams. Compared with a case where the beam shape is circular or square under a condition of the same beam power density or beam area, this makes it possible to suppress an interference (crosstalk) in a plurality of coloring layers, to ensure a wider color gamut, and further to perform highly efficient drawing.

Brief Description of the Drawings

[FIG. 1] FIG. 1 illustrates an example of a perspective configuration of a laminate according to an embodiment of the present disclosure.
[FIG. 2] FIG. 2 illustrates an example of a cross-sectional configuration of the laminate of FIG. 1.
[FIG. 3] FIG. 3 illustrates an example of a cross-sectional configuration of the recording medium of FIG. 1.
[FIG. 4] FIG. 4 illustrates a modification example of the cross-sectional configuration of the recording medium of FIG. 1.
[FIG. 5] FIG. 5 illustrates a modification example of the cross-sectional configuration of the recording medium of FIG. 1.
[FIG. 6] FIG. 6 illustrates a modification example of the cross-sectional configuration of the recording medium of FIG. 1.
[FIG. 7] FIG. 7 illustrates a modification example of a perspective configuration of the laminate of FIG. 1.
[FIG. 8] FIG. 8 illustrates an example of a cross-sectional configuration of the laminate of FIG. 7.
[FIG. 9] FIG. 9 illustrates a modification example of a cross-sectional configuration of the laminate of FIG. 7.
[FIG. 10] FIG. 10 illustrates a modification example of the cross-sectional configuration of the laminate of FIG. 1.
[FIG. 11] FIG. 11 illustrates a modification example of the cross-sectional configuration of the laminate of FIG. 7.
[FIG. 12] A of FIG. 12A is a plan view of a front surface of a smartphone. B of FIG. 12 is a plan view of a back surface of a smartphone.
[FIG. 13] FIG. 13 is a perspective view of a notebook personal computer.

[FIG. 14] FIG. 14 is a perspective view of a cosmetic container.
[FIG. 15] FIG. 15 is a perspective view of a booklet.
[FIG. 16] FIG. 16 illustrates an example of a schematic configuration of a drawing system that performs drawing on a recording medium provided in the laminate of FIG. 1, or the like.
[FIG. 17] FIG. 17 illustrates an example of a schematic configuration of a drawing section of FIG. 16.
[FIG. 18] FIG.18 illustrates an example of an optical output and a drawing trace when a laser beam outputted from a light source section of FIG. 17 is a continuous wave.
[FIG. 19] FIG. 19 illustrates an example of an optical output and a drawing trace when a laser beam outputted from the light source section of FIG. 17 is a pulse wave.
[FIG. 20] FIG. 20 illustrates an example of a beam shape of a laser beam.
[FIG. 21] FIG. 21 illustrates an appropriate range of a beam shape of a laser beam.
[FIG. 22] FIG. 22 illustrates an example of a relationship between a height of an irradiation surface and a short axis length of a beam shape when a beam rotation angle is 0 degrees.
[FIG. 23] FIG. 23 illustrates an example of a beam shape of a laser beam.
[FIG. 24] FIG. 24 illustrates an example of a relationship between a height of an irradiation surface and a short axis length of a beam shape when the beam rotation angle is 3 degrees.
[FIG. 25] (A) of FIG. 25 illustrates an example of a drawing trace when the beam rotation angle is 0 degrees. (B) of FIG. 25 illustrates an example of a drawing trace when the beam rotation angle is 3 degrees.
[FIG. 26] FIG. 26 illustrates an example of an evaluation result of image quality when tested under each condition from 1 to 24.
[FIG. 27] FIG. 27 illustrates an example of an optical configuration of the light source section of FIG. 17.
[FIG. 28] FIG. 28 illustrates an example of the optical configuration illustrated in FIG. 27.
[FIG. 29] FIG. 29 illustrates an example of a rotation mechanism intended to cause a portion of the optical configuration illustrated in FIG. 27 to be rotated in a Z-axis direction.
[FIG. 30] FIG.30 illustrates a modification example of a schematic configuration of a drawing section of FIG. 17.
[FIG. 31] FIG. 31 illustrates an example of a drawing method in a drawing system including a drawing section of FIG. 30.
[FIG. 32] FIG. 32 illustrates a modification example of the drawing method in the drawing system including the drawing section of FIG. 30.
[FIG. 33] FIG. 33 illustrates a modification example of the schematic configuration of the drawing section of FIG. 17.
[FIG. 34] FIG. 34 illustrates a modification example of the schematic configuration of the drawing section of FIG. 30.

## Modes for Carrying Out the Invention

In the following, an embodiment for implementing the present disclosure is described in detail with reference to the drawings. The following description is a specific example of the present disclosure, and the present disclosure is not limited to the following embodiment.

### <1. Embodiment>

### [Configuration]

A laminate including a recording medium according to one embodiment of the present disclosure is described. FIG. 1 illustrates an example of a perspective configuration of a laminate 10 including a recording medium according to one embodiment of the present disclosure. FIG. 2 illustrates an example of a cross-sectional configuration of the laminate 10 of FIG. 1 at line A-A.

The laminate 10 includes a base member 11, an adhesive layer 12, a spacer layer 13, an adhesive layer 14, an overlay layer 15, and a recording medium 20. For example, the laminate 10 may be a card such as a security card, a financial payment card, an ID card, or a personal transaction card or the like (hereinafter referred to as a "security card or the like"). Examples of the financial payment card include a credit card, a cash card, or the like. Examples of the ID card include a driver's license, an employee ID card, a membership card, a student ID card, or the like. Examples of the personal transaction card include a prepaid card, a points card, or the like.

The base member 11 is a support that supports the recording medium 20 and the spacer layer 13. The base member 11 may have a color such as white. The base member 11 may have a design, picture, photograph, text, or a combination of two or more thereof (hereinafter referred to as "design or the like") printed on one main surface of a side on which the spacer layer 13 and the recording medium 20 or the like are provided.

For example, the base member 11 includes plastic. The base member 11 may include at least one type selected from a group including a coloring agent, antistatic agent, a flame retardant, and a surface modifier, or the like as

appropriate. At least one main surface of the base member 11 may include a reflective layer (not illustrated), or the base member 11 itself may also have a function as a reflective layer.

The plastic used in the base member 11 includes, for example, at least one type selected from a group including an ester-based resin, an amide-based resin, an olefin-based resin, a vinyl-based resin, an acrylic-based resin, an imide-based resin, a styrene-based resin, and an engineering plastic or the like. In a case where the base member 11 includes two or more types of resin, those two or more types of resins may be mixed, copolymerized, or laminated.

The ester-based resin described above includes, for example, at least one type selected from a group including polyethylene terephthalate (PET), polybutylene terephthalate (PBT), polyethylene naphthalate (PEN), polyethylene terephthalate-isophthalate copolymer, and terephthalic acid-cyclohexanedimethanol-ethylene glycol copolymer or the like. The amide-based resin described above includes, for example, at least one type selected from a group including nylon 6, nylon 66, and nylon 610 or the like. The olefin-based resin described above includes, for example, at least one type selected from a group including polyethylene (PE), polypropylene (PP), and polymethylpentene (PMP) or the like. The vinyl-based resin described above includes, for example, polyvinyl chloride (PVC).

The acrylic-based resin described above includes, for example, at least one type selected from a group including polyacrylate, polymethacrylate, and polymethyl methacrylate (PMMA) or the like. The imide-based resin described above includes, for example, at least one type selected from a group including polyimide (PI), polyamideimide (PAI), polyetherimide (PEI) or the like. The styrene-based resin described above includes at least one type selected from a group including polystyrene (PS), high-impact polystyrene, acrylonitrile-styrene resin (AS resin), and acrylonitrile-butadiene-styrene resin (ABS resin) or the like. The engineering plastic described above includes, for example, at least one type selected from a group including polycarbonate (PC), polyarylate (PAR), polysulfone (PSF), polyethersulfone (PES), polyphenylene ether (PPE), polyphenylene sulfide (PPS), polyetherketone (PEK), polyether-etherketone (PEEK), polyphenylene oxide (PPO), and polyethersulfite or the like.

The base member 11 may include a laser marking layer. The laser marking layer used in the base member 11 may be a known laser marking sheet. For example, the laser marking layer described above has a configuration that allows laser marking by at least one of the following methods (1) to (5).

(1) Method of foaming a resin material to cause the resin material to develop a color
(2) Method of adding an additive that absorbs a laser beam to a resin material and causing the additive itself to develop a color
(3) Method of adding an additive that absorbs a laser beam to a resin material and causing the additive to generate heat, thereby carbonizing a surrounding resin material to develop a color
(4) Method of engraving a surface of a resin layer by laser irradiation and using a change in a state of the surface
(5) Method of marking by irradiating a black or dark-colored resin material with a laser beam, thereby sublimating (decomposing) and decolorizing (exposing a ground color of the resin material) a coloring agent (carbon black).

For example, the laser marking layer described above includes a photothermal conversion agent and a resin material. The resin material used in the above laser marking layer includes, for example, polycarbonate resin. The photothermal conversion agent used in the above laser marking layer includes, for example, carbon.

The spacer layer 13 is provided on one main surface of the base member 11, and the adhesive layer 12 is sandwiched between the base member 11 and the spacer layer 13. The spacer layer 13 includes a housing section 13A that is intended to house the recording medium 20. The housing section 13A is provided inside a portion of a surface of the spacer layer 13. The housing section 13A may be a through hole that penetrates through the spacer layer 13 in a thickness direction. The spacer layer 13 is intended to suppress a step that is formed by the recording medium 20 when the recording medium 20 is sandwiched between the base member 11 and the overlay layer 15. The spacer layer 13 has a thickness that is approximately the same as that of the recording medium 20 and covers a portion of one main surface of the base member 11 other than a region including the recording medium 20.

The spacer layer 13 is in a film-like state. The spacer layer 13 may have transparency. The spacer layer 13 includes a plastic. As the plastic used in the spacer layer 13, it is possible to give a material similar to that used in the base member 11. The spacer layer 13 may include a laser marking layer. For example, the laser marking layer used in the spacer layer 13 may be the same layer as the laser marking layer that can be used in the base member 11.

The overlay layer 15 is provided on the spacer layer 13 and the recording medium 20, and covers the spacer layer 13 and the recording medium 20. The adhesive layer 14 is sandwiched between the spacer layer 13 and the recording medium 20, and the overlay layer 15. The overlay layer 15 protects a member within the laminate 10 (that is, the recording medium 20 and the spacer layer 13) and maintains a mechanical reliability of the laminate 10.

The overlay layer 15 is in a film-like state. The overlay layer 15 has transparency. The overlay layer 15 includes a plastic. As the plastic used in the overlay layer 15, it is possible to give a material similar to that used in the base member 11. A design or the like may be printed on at least one main surface of the overlay layer 15. The overlay layer 15 may include a laser marking layer. For example, the laser marking layer used in the overlay layer 15 may be the same layer as the laser

marking layer that can be used in the base member 11.

The adhesive layer 12 is provided between the base member 11 and the spacer layer 13 to bond the base member 11 and the spacer layer 13 to each other. The adhesive layer 14 is provided between the spacer layer 13 and the overlay layer 15 to bond the spacer layer 13 and the overlay layer 15 to each other. The adhesive layers 12 and 14 have transparency. The adhesive layers 12 and 14 include a thermal adhesive. The thermal adhesive used in the adhesive layers 12 and 14 includes a thermosetting resin. The thermosetting resin used in the adhesive layers 12 and 14 includes at least one type selected from a group including, for example, an epoxy-based resin and a urethane-based resin or the like. **In** terms of reducing damage to the recording medium 20, it is preferable that a curing temperature of the above thermal adhesive be within a range of 100°C or more and 120°C or less.

FIG. 3 illustrates an example of a cross-sectional configuration of the recording medium 20. The recording medium 20 is configured to allow a change in coloration state by an external stimulus. For example, this change in coloration state allows a design or the like to be recorded on the recording medium 20. Specifically, the external stimulus is an irradiation with a laser beam. **In** terms of improving an anti-counterfeiting property, it is preferable that the change in coloration state be irreversible. **In** other words, it is preferable for the recording medium 20 to have a write-once system that allows a pattern or the like to be written only once. It is preferable that the recording medium 20 be fitted into the housing section 13A of the spacer layer 13, to integrate the recording medium 20 and the spacer layer 13. This allows a boundary between the recording medium 20 and the spacer layer 13 to be less visible in an in-plane direction of the laminate 10. Thus, it is possible to improve the anti-counterfeiting property.

For example, the recording medium 20 includes a base member 21, an intermediate layer 22, a coloring layer 23, an intermediate layer 24, a coloring layer 25, an intermediate layer 26, and a coloring layer 27 in this order. An adhesive layer may be provided between the base member 21 and the intermediate layer 22, between the intermediate layer 22 and the coloring layer 23, between the coloring layer 23 and the intermediate layer 24, between the intermediate layer 24 and the coloring layer 25, between the coloring layer 25 and the intermediate layer 26, and between the intermediate layer 26 and the coloring layer 27. For example, a protective layer 28 may be provided at an outermost surface of the recording medium 20 as illustrated in FIG. 3, or, for example, the outermost surface of the recording medium 20 may be the coloring layer 27 as illustrated in FIG. 4.

The base member 21 is a support intended to support the coloring layers 23, 25, and 27 or the like. It is preferable that the base member 21 include a material having excellent heat resistance and excellent dimensional stability in a planar direction. The base member 21 may have either light-transmission property or non-light transmission property. For example, the base member 21 may be a substrate having rigidity such as a wafer, or thin-layer glass, film, or paper or the like having flexibility. Using a flexible substrate as the base member 21 makes it possible to realize a flexible (bendable) recording medium.

For example, as a constituent material of the base member, it is possible to give an inorganic material, a metallic material, or a plastic or the like. The inorganic material used in the base member 21 includes, for example, at least one type selected from a group including silicon (Si), silicon oxide (SiOx), silicon nitride (SiNx), and aluminum oxide (AlOx) or the like. The silicon oxide described above includes glass and spin-on-glass (SOG) or the like. The metallic material used in the base member 21 includes, for example, at least one type selected from a group including aluminum (Al), nickel (Ni), and stainless steel or the like. As the plastic used in the base member 21, it is possible to give an example of a material similar to that of the base member 11.

It is to be noted that a reflective layer (not illustrated) may be provided in at least one main surface of the base member 21, or the base member 21 itself may also have a function as a reflective layer. The base member 21 having such a configuration allows a clearer color display.

The coloring layers 23, 25, and 27 are each configured to allow a change in coloration state by an external stimulus such as a laser beam or heat. The coloring layers 23, 25, and 27 are each configured using a material that enables stable recording and control of the coloration state. The coloring layers 23, 25, and 27 include a coloring compound having an electron-donating property, a color developer having an electron-accepting property and corresponding to the coloring compound, a matrix polymer (binder), and a photothermal conversion agent. Other than the materials described above, the coloring layers 23, 25, and 27 may include, as necessary, at least one type of additive selected from a group including, for example, a sensitizer and a UV absorber or the like.

The coloring layers 23, 25, and 27 each include a coloring compound having a coloring hue different from each other. In other words, the coloring compound included in each of the coloring layer 23, 25, and 27 represents a color that is different from each other in the coloration state. For example, the coloring compound included in the coloring layer 23 represents a cyan color in the coloration state. The coloring compound included in the coloring layer 25, for example, represents a magenta color in the coloration state. The coloring compound included in the coloring layer 27, for example, represents a yellow color in the coloration state. The photothermal conversion agent included in each of the coloring layers 23, 25, and 27 absorbs a laser beam having a wavelength range different from each other (for example, a near-infrared laser beam different from each other), and generates heat.

Preferably each of the coloring layers 23, 25, and 27 has a thickness of 1 μm or more and 20 μm or less, and more

preferably 2 μm or more and 15 μm or less. When the thickness of each coloring layer 23, 25 and 27 is 1 μm or more, it is possible to obtain a sufficient color density. On the other hand, when the thickness of each coloring layer 23, 25, and 27 is 20 μm or less, it is possible to suppress heat utilization of each coloring layer 23, 25, and 27 from becoming too large. Thus, it is possible to suppress deterioration of the coloring property.

For example, the coloring compound described above is a leuco dye. The leuco dye may be, for example, an existing dye for thermal paper. As a specific example, it is possible to give a compound including an electron-donating group in a molecule, as expressed by the following formula (1).

[Chemical Formula 1]

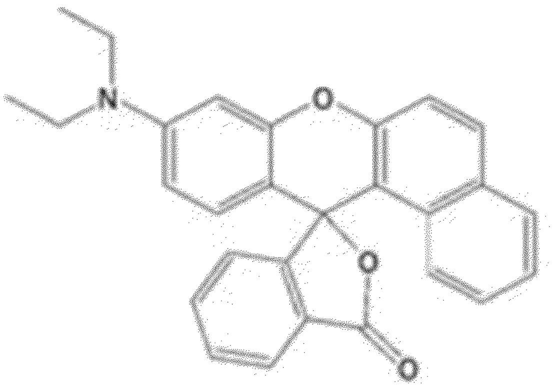

···(1)

The coloring compound described above is not particularly limited, and it is possible to select according to a purpose as appropriate. As a specific coloring compound, for example, it is possible to give a fluoran-based compound, a triphenylmethanephthalide-based compound, an azaphthalide-based compound, a phenothiazine-based compound, a leucoauramine-based compound, and an indolinophthalide-based compound, other than the compound expressed in the above formula (1). Other examples include 2-anilino-3-methyl-6-diethylamino fluorane, 2-anilino-3-methyl-6-di(n-butylamino) fluorane, 2-anilino-3-methyl-6-(N-n-propyl-N-methylamino) fluorane, 2-anilino-3-methyl-6-(N-isopropyl-N-methylamino) fluorane, 2-anilino-3-methyl-6-(N-isobutyl-N-methylamino) fluorane, 2-anilino-3-methyl-6-(N-n-amyl-N-methylamino) fluorane, 2-anilino-3-methyl-6-(N-sec-butyl-N-methylamino) fluorane, 2-anilino-3-methyl-6-(N-n-amyl-N-ethylamino) fluorane, 2-anilino-3-methyl-6-(N-iso-amyl-N-ethylamino) fluorane, 2-anilino-3-methyl-6-(N-n-propyl-N-isopropylamino) fluorane, 2-anilino-3-methyl-6-(N-cyclohexyl-N-methylamino) fluorane, 2-anilino-3-methyl-6-(N-ethyl-p-toluidino) fluorane, 2-anilino-3-methyl-6-(N-methyl-p-toluidino) fluorane, 2-(m-trichloromethylanilino)-3-methyl-6-diethylaminofluorane, 2-(m-trifluoromethylanilino)-3-methyl-6-diethylaminofluorane, 2-(m-trichloromethylanilino)-3-methyl-6-(N-cyclohexyl-N-methylamino) fluorane, 2-(2,4-dimethylanilino)-3-methyl-6-diethylaminofluorane, 2-(N-ethyl-p-toluidino)-3-methyl-6-(N-ethylanilino) fluorane, 2-(N-ethyl-p-toluidino)-3-methyl-6-(N-propyl-p-toluidino)fluorane, 2-anilino-6-(N-n-hexyl-N-ethylamino) fluorane, 2-(o-chloroanilino)-6-diethylamino fluorane, 2-(o-chloroanilino)-6-dibutylamino fluorane, 2-(m-trifluoromethylanilino)-6-diethylaminofluorane, 2,3-dimethyl-6-dimethylaminofluorane, 3-methyl-6-(N-ethyl-p-toluidino) fluorane, 2-chloro-6-diethylaminofluorane, 2-bromo-6-diethylaminofluorane, 2-chloro-6-dipropylaminofluorane, 3-chloro-6-cyclohexylaminofluorane, 3-bromo-6-cyclohexylaminofluorane, 2-chloro-6-(N-ethyl-N-isoamylamino) fluorane, 2-chloro-3-methyl-6-diethylamino fluorane, 2-anilino-3-chloro-6-diethylamino fluorane, 2-(o-chloroanilino)-3-chloro-6-cyclohexylaminofluorane, 2-(m-trifluoromethylanilino)-3-chloro-6-diethylaminofluorane, 2-(2,3-dichloroanilino)-3-chloro-6-diethylaminofluorane, 1,2-benzo-6-diethylaminofluorane, 3-diethylamino-6-(m-trifluoromethylanilino) fluorane, 3-(1-ethyl-2-methylindol-3-yl)-3-(2-ethoxy-4-diethylaminophenyl)-4-azaphthalide, 3-(1-ethyl-2-methylindol-3-yl)-3-(2-ethoxy-4-diethylaminophenyl)-7-azaphthalide, 3-(1-octyl-2-methylindole-3-yl)-3-(2-ethoxy-4-diethylaminophenyl)-4-azaphthalide, 3-(1-ethyl-2-methylindol-3-yl)-3-(2-methyl-4-diethylaminophenyl)-4-azaphthalide, 3-(1-ethyl-2-methylindol-3-yl)-3-(2-methyl-4-diethylaminophenyl)-7-azaphthalide, 3-(1-ethyl-2-methylindol-3-yl)-3-(4-diethylaminophenyl)-4-azaphthalide, 3-(1-ethyl-2-methylindol-3-yl)-3-(4-N-n-amyl-N-methylaminophenyl)-4-azaphthalide, 3-(1-methyl-2-methylindol-3-yl)-3-(2-hexyloxy-4-diethylaminophenyl)-4-azaphthalide, 3,3-bis(2-ethoxy-4-diethylaminophenyl)-4-azaphthalide, 3,3-bis(2-ethoxy-4-diethylaminophenyl)-7-azaphthalide, 2-(p-acetylanilino)-6-(N-n-amyl-N-n-butylamino) fluorane, 2-benzylamino-6-(N-ethyl-p-toluidino) fluorane, 2-benzylamino-6-(N-methyl-2,4-dimethylanilino) fluorane, 2-benzylamino-6-(N-ethyl-2,4-dimethylanilino) fluorane, 2-benzylamino-6-(N-methyl-p-toluidino) fluorane, 2-benzylamino-6-(N-ethyl-p-toluidino) fluorane, 2-(di-p-methylbenzylamino)-6-(N-ethyl-p-toluidino) fluorane, 2-(α-phenylethylamino)-6-(N-ethyl-p-toluidino) fluorane, 2-methylamino-6-(N-methylanilino) fluorane, 2-methylamino-6-(N-ethylanilino) fluorane, 2-methylamino-6-(N-propylanilino) fluorane, 2-ethylamino-6-(N-methyl-p-toluidino) fluorane, 2-methylamino-6-(N-methyl-2,4-dimethylanilino) fluorane, 2-ethylamino-6-(N-ethyl-2,4-dimethylanilino) fluorane, 2-dimethylamino-6-(N-methylanilino) fluorane, 2-dimethylamino-6-(N-ethylanilino) fluorane, 2-diethylamino-6-(N-methyl-p-toluidino) fluorane, 2-diethylamino-6-(N-ethyl-p-toluidino) fluorane, 2-dipropylamino-6-(N-methylanilino) fluorane, 2-dipropylamino-6-(N-ethylanilino) fluorane, 2-amino-6-(N-methylanilino) fluorane, 2-amino-6-(N-ethylanilino) fluorane, 2-amino-6-(N-propylanilino) fluorane, 2-amino-6-(N-methyl-p-toluidino) fluorane, 2-amino-6-(N-ethyl-p-toluidino) fluorane, 2-amino-6-(N-propyl-p-toluidino) fluorane, 2-amino-6-(N-methyl-p-ethylanilino) fluorane, 2-amino-6-(N-ethyl-p-ethylanilino) fluorane, 2-amino-6-(N-propyl-p-ethylanilino) fluorane, 2-amino-6-(N-methyl-2,4-dimethylanilino) fluorane, 2-amino-6-(N-ethyl-2,4-dimethylanilino) fluorane, 2-amino-6-(N-propyl-2,4-dimethylanilino) fluorane, 2-amino-6-(N-methy-p-chloroanilino) fluorane, 2-amino-6-(N-ethyl-p-chloroanilino) fluorane, 2-amino-6-(N-propyl-p-chloroanilino) fluorane, 1,2-benzo-6-(N-ethyl-N-isoamylamino) fluorane, 1,2-benzo-6-dibutylamino fluorane, 1,2-benzo-6-(N-methyl-N-cyclohexylamino) fluorane, and 1,2-benzo-6-(N-ethyl-N-toluidino) fluorane, or the like. Each of the coloring layers 23, 25, and 27 may include one type alone or two or more types of the above coloring compounds.

The above color developer may include a compound expressed by the following formula (2).

[Chemical Formula 2]

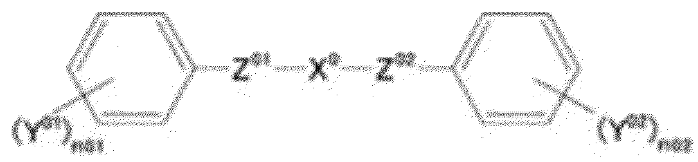

··· (2)

In the formula (2), $X^0$ is a divalent group including at least one benzene ring. $Y^{01}$ and $Y^{02}$ are each independently a monovalent group. n01 and n02 are each independently any integer from 0 to 5. In a case where n01 is any integer from 2 to 5, $Y^{01}$ may be the same as or different from each other. In a case where n02 is any integer from 2 to 5, $Y^{02}$ may be the same as or different from each other. $Z^{01}$ and $Z^{02}$ are each independently a hydrogen bonding group.

The inclusion of at least one benzene ring in $X^0$ allows for a high melting point compared with a case where $X^0$ is an aliphatic hydrocarbon group (for example, a normal alkyl chain), thus making it possible to improve a color retention characteristic during storage at high temperature and high humidity (hereinafter referred to as "high temperature and high humidity storage characteristic"). In terms of improving the high temperature and high humidity storage characteristic and heat resistance, it is preferable for $X^0$ to include at least two benzene rings. For example, the high temperature and high humidity storage characteristic is a storage characteristic in an environment of 80°C and 60% RH. Improved heat resistance improves the resistance of the recording medium 20 to a harsh process (for example, heat pressing or integral molding or the like using a molten resin or the like). In a case where $X^0$ includes at least two benzene rings, the at least two benzene rings may be fused together. For example, the at least two benzene rings may be naphthalene or anthracene or the like.

As a result of $Z^{01}$ and $Z^{02}$ each being independently a hydrogen bonding group, it is possible for a color developer to be present in a solid state to some extent through hydrogen bonding, and this improves a stability of a color developer in the coloring layers 23, 25, and 27. **In** the present description, a hydrogen bonding group means a functional group including an atom that enables hydrogen bonding with another functional group or an atom present in another compound or the like.

It is preferable that the above color developer include a compound expressed by the following formula (3).

[Chemical Formula 3]

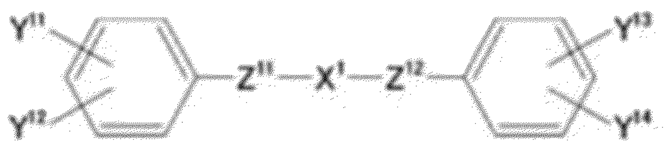

··· (3)

In the formula (3), $X^1$ is a divalent group including at least one benzene ring. $Y^{11}$, $Y^{12}$, $Y^{13}$, and $Y^{14}$ are each a monovalent group independently of each other. $Z^{11}$ and $Z^{12}$ are each a hydrogen bonding group independently of each other.

As a result of $X^1$ including at least one benzene ring, it is possible to obtain a high melting point compared with a case where $X^1$ is an aliphatic hydrocarbon group (for example, a normal alkyl chain), thus making it possible to improve the high temperature and high humidity storage characteristic. In terms of improving the high temperature and high humidity storage characteristic and heat resistance, it is preferable for $X^1$ to include at least two benzene rings. In a case where $X^1$

includes at least two benzene rings, the at least two benzene rings may be fused together. For example, the at least two benzene rings may be naphthalene or anthracene or the like.

As a result of $Z^{11}$ and $Z^{12}$ each being independently a hydrogen bonding group, it is possible for the color developer to be present in a solid state to some extent through hydrogen bonding, and this improves a stability of the color developer in the coloring layers 23, 25, and 27.

In a case where the formulae (2) and (3) include a hydrocarbon group, the hydrocarbon group is a generic term for a group including carbon (C) and hydrogen (H), and the hydrocarbon group may be a saturated hydrocarbon group or an unsaturated hydrocarbon group. The saturated hydrocarbon group is an aliphatic hydrocarbon group without a carbon-carbon multiple bond, while the unsaturated hydrocarbon group is an aliphatic hydrocarbon group with a carbon-carbon multiple bond (carbon-carbon double bond or carbon-carbon triple bond).

In a case where the formulae (2) and (3) include a hydrocarbon group, the hydrocarbon group may be in a chain-like state or may include one or more rings. The chain may be in a straight chain state or may be in a branched chain state with one or more side chains or the like.

($X^0$ and $X^1$ including one benzene ring)

For example, $X^0$ in the formula (2) and $X^1$ in the formula (3) are each a divalent group including one benzene ring. The divalent group is expressed, for example, by the following formula (4).

[Chemical Formula 4]

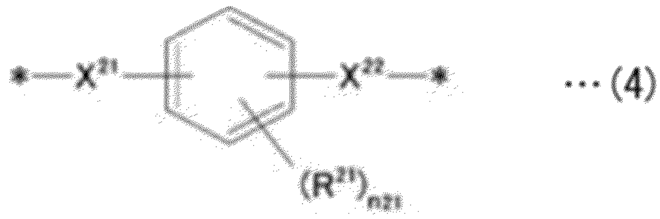

In the formula (4), $X^{21}$ may be present or absent, and in a case where $X^{21}$ is present, $X^{21}$ is a divalent group. $X^{22}$ may be present or absent, and in a case where $X^{22}$ is present, $X^{22}$ is a divalent group. $R^{21}$ is a monovalent group. n21 is any integer from 0 to 4. In a case where n21 is any integer from 2 to 4, $R^{21}$ may be the same as or different from each other. An asterisk (*) represents a bonding site.

In the formula (4), bonding positions of $X^{21}$ and $X^{22}$ to the benzene ring are not limited. In other words, the bonding positions of $X^{21}$ and $X^{22}$ to the benzene ring may be any one of an ortho position, a meta position, or a para position.

In terms of improving the high temperature and high humidity storage characteristic, it is preferable that the above divalent group including one benzene ring be expressed by the following formula (5).

[Chemical Formula 5]

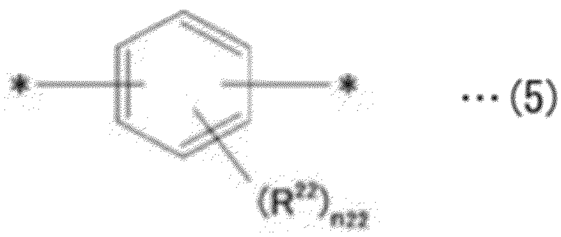

In the formula (5), $R^{22}$ is a monovalent group. n22 is any integer from 0 to 4. In a case where n22 is any integer from 2 to 4, $R^{22}$ may be the same as or different from each other. An asterisk (*) represents a bonding site.

In a case where $X^0$ in the formula (2) is a divalent group including one benzene ring, bonding positions of $Z^{01}$ and $Z^{02}$ to the benzene ring are not limited in the formula (5). In other words, the bonding positions of $Z^{01}$ and $Z^{02}$ to the benzene ring may be any one of the ortho position, the meta position, or the para position.

In a case where $X^1$ in the formula (3) is a divalent group including one benzene ring, bonding positions of $Z^{11}$ and $Z^{12}$ to the benzene ring are not limited in the formula (5). In other words, the bonding positions of $Z^{11}$ and $Z^{12}$ to the benzene ring may be any one of the ortho position, the meta position, or the para position.

($X^{21}$ and $X^{22}$)

It is sufficient that $X^{21}$ and $X^{22}$ in the formula (4) are each independently a divalent group, and although not particularly limited, for example, $X^{21}$ and $X^{22}$ are each a hydrocarbon group that may have a substituent. It is preferable that the hydrocarbon group be in a chain-like state. When the hydrocarbon group is in a chain-like state, it is possible to reduce a melting point of the color developer, thereby causing the color developer to melt by laser irradiation and making it easier to develop the coloring compound. In terms of reducing the melting point of the color developer, a normal alkyl chain is particularly preferable among chain-like hydrocarbon groups.

For example, a hydrocarbon group that may have a substituent has a carbon number of 1 or more and 15 or less, 1 or more and 13 or less, 1 or more and 12 or less, 1 or more and 10 or less, 1 or more and 6 or less, or 1 or more and 3 or less.

In a case where $X^{21}$ and $X^{22}$ in the formula (4) are each a normal alkyl group, the carbon number of the normal alkyl group is preferably 8 or less, more preferably 6 or less, still more preferably 5 or less, and particularly preferably 3 or less in terms of high temperature storage stability. When the carbon number of the normal alkyl group is 8 or less, it is considered that a site that interacts with the coloring compound such as a leuco dye at the time of color development is less likely to be displaced because a short length of the normal alkyl group is less likely to cause thermal disturbance in the color developer during storage at high temperature. Therefore, the coloring compound such as a leuco dye is less likely to lose color during storage at high temperature, thereby improving the high temperature storage stability.

Examples of the substituent that may be included in the hydrocarbon group include a halogen group (for example, a fluorine group) or an alkyl group having a halogen group (for example, a fluorine group) or the like. In the hydrocarbon group that may have a substituent, a portion of the carbon of the hydrocarbon group (for example, a portion of the carbon included in the main chain of the hydrocarbon group) may be substituted with an element such as oxygen.

($R^{21}$)

It is sufficient that $R^{21}$ in the formula (4) is any monovalent group, and although not particularly limited, for example, $R^{21}$ is a hydrocarbon group that may have a halogen group or a substituent. For example, the halogen group is a fluorine group (-F), a chlorine group (-Cl), a bromine group (-Br), or an iodine group (-I).

For example, a hydrocarbon group that may have a substituent has a carbon number of 1 or more and 15 or less, 1 or more and 13 or less, 1 or more and 12 or less, 1 or more and 10 or less, 1 or more and 6 or less, or 1 or more and 3 or less. Examples of the substituent that may be included in the hydrocarbon group include a halogen group (for example, a fluorine group) or an alkyl group having a halogen group (for example, a fluorine group). In the hydrocarbon group that may have a substituent, a portion of the carbon of the hydrocarbon group (for example, a portion of the carbon included in the main chain of the hydrocarbon group) may be substituted with an element such as oxygen.

($R^{22}$)

It is sufficient that $R^{22}$ in the formula (5) is any monovalent group, and although not particularly limited, for example, $R^{22}$ is a hydrocarbon group that may have a halogen group or a substituent. Each hydrocarbon group that may have a halogen group or a substituent is similar to $R^{21}$ in the above formula (2).

($X^0$ and $X^1$ including two benzene rings)

For example, $X^0$ in the formula (2) and $X^1$ in the formula (3) are each a divalent group including two benzene rings. The divalent group is expressed, for example, by the following formula (6).

[Chemical Formula 6]

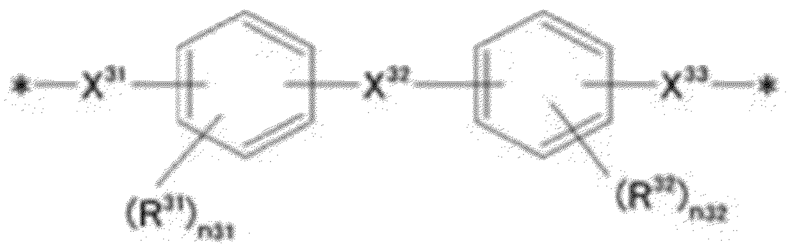

··· (6)

In the formula (6), $X^{31}$ may be present or absent, and in a case where $X^{31}$ is present, $X^{31}$ is a divalent group. $X^{32}$ may be present or absent, and in a case where $X^{32}$ is present, $X^{32}$ is a divalent group. $X^{33}$ may be present or absent, and in

a case where $X^{33}$ is present, $X^{33}$ is a divalent group. $R^{31}$ and $R^{32}$ are each independently a monovalent group. n31 and n32 are each independently any integer from 0 to 4. In a case where n31 is any integer from 2 to 4, $R^{31}$ may be the same as or different from each other. In a case where n32 is any integer from 2 to 4, $R^{32}$ may be the same as or different from each other. An asterisk (*) represents a bonding site.

In the formula (6), bonding positions of $X^{31}$ and $X^{32}$ to the benzene ring are not limited. In other words, the bonding positions of $X^{31}$ and $X^{32}$ to the benzene ring may be any one of the ortho position, the meta position, or the para position. Similarly, in the formula (6), the bonding positions of $X^{32}$ and $X^{33}$ to the benzene ring are not limited. In other words, the bonding positions of $X^{32}$ and $X^{33}$ to the benzene ring may be any one of the ortho position, the meta position, or the para position.

In terms of improving the high temperature and high humidity storage characteristic, it is preferable that the above divalent group including two benzene rings be expressed by the following formula (7).

[Chemical Formula 7]

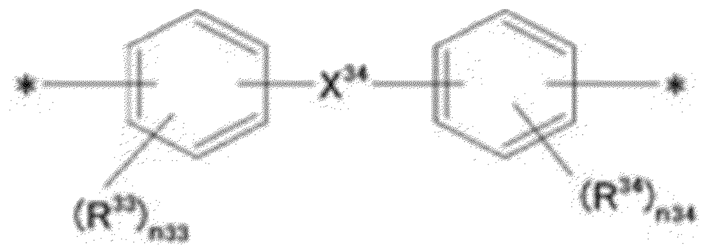

$\cdots$ (7)

In the formula (7), $X^{34}$ is a divalent group. $R^{33}$ and $R^{34}$ are each independently a monovalent group. n33 and n34 are each independently any integer from 0 to 4. In a case where n33 is any integer from 2 to 4, $R^{33}$ may be the same as or different from each other. In a case where n34 is any integer from 2 to 4, $R^{34}$ may be the same as or different from each other. An asterisk (*) represents a bonding site.

In a case where $X^0$ in the formula (2) is a divalent group including two benzene rings, bonding positions of $Z^{01}$ and $X^{34}$ to the benzene ring are not limited in the formula (7). In other words, the bonding positions of $Z^{01}$ and $X^{34}$ to the benzene ring may be any one of the ortho position, the meta position, or the para position. Similarly, in the formula (7), bonding positions of $Z^{02}$ and $X^{34}$ to the benzene ring are not limited. In other words, the bonding positions of $Z^{02}$ and $X^{34}$ to the benzene ring may be any one of the ortho position, the meta position, or the para position.

In a case where $X^1$ in the formula (3) is a divalent group including two benzene rings, bonding positions of $Z^{11}$ and $X^{34}$ to the benzene ring are not limited in the formula (7). In other words, the bonding positions of $Z^{11}$ and $X^{34}$ to the benzene ring may be any one of the ortho position, the meta position, or the para position. Similarly, in the formula (7), bonding positions of $Z^{12}$ and $X^{34}$ to the benzene ring are not limited. In other words, the bonding positions of $Z^{12}$ and $X^{34}$ to the benzene ring may be any one of the ortho position, the meta position, or the para position.

($X^{31}$, $X^{32}$, and $X^{33}$)

It is sufficient that $X^{31}$, $X^{32}$, and $X^{33}$ in the formula (6) are each independently a divalent group, and although not particularly limited, for example, $X^{31}$, $X^{32}$, and $X^{33}$ are each a hydrocarbon group that may have a substituent. The hydrocarbon group is similar to $X^{21}$ and $X^{22}$ in the above formula (4).

($X^{34}$)

It is sufficient that $X^{34}$ in the formula (7) is any divalent group, and although not particularly limited, for example, $X^{34}$ is a hydrocarbon group that may have a substituent. The hydrocarbon group is similar to $X^{21}$ and $X^{22}$ in the above formula (4).

($R^{31}$ and $R^{32}$)

It is sufficient that $R^{31}$ and $R^{32}$ in the formula (6) are each any monovalent group, and although not particularly limited, for example, $R^{31}$ and $R^{32}$ are each a hydrocarbon group that may have a halogen group or a substituent. Each hydrocarbon group that may have a halogen group or a substituent is similar to $R^{21}$ in the above formula (4).

($R^{33}$ and $R^{34}$)

It is sufficient that $R^{33}$ and $R^{34}$ in the formula (7) are each any monovalent group, and although not particularly limited, for example, $R^{33}$ and $R^{34}$ are each a hydrocarbon group that may have a halogen group or a substituent. Each hydrocarbon group that may have a halogen group or a substituent is similar to $R^{21}$ in the above formula (4).

($Y^{01}$ and $Y^{02}$)

For example, $Y^{01}$ and $Y^{02}$ in the formula (2) are each independently a hydrocarbon group that may have a hydrogen group (-H), a hydroxy group (-OH), a halogen group (-X), a carboxy group (-COOH), an ester group (-COOR), or a substituent. The halogen group is, for example, a fluorine group (-F), a chlorine group (-Cl), a bromine group (-Br), or an iodine group (-I).

For example, the hydrocarbon group that may have a substituent has a carbon number of 1 or more and 15 or less, 1 or more and 13 or less, 1 or more and 12 or less, 1 or more and 10 or less, 1 or more and 6 or less, or 1 or more and 3 or less. Examples of the substituent that may be included in the hydrocarbon group include a halogen group (for example, a fluorine group) or an alkyl group having a halogen group (for example, a fluorine group). In the hydrocarbon group that may have a substituent, a portion of the carbon of the hydrocarbon group (for example, a portion of the carbon included in the main chain of the hydrocarbon group) may be substituted with an element such as oxygen.

In the formula (2), it is preferable that one of $(Y^{01})_{n01}$ and/or one of $(Y^{02})_{n02}$ be a hydroxy group (-OH). As a result of one of $(Y^{01})_{n01}$ and/or one of $(Y^{02})_{n02}$ being a hydroxy group (-OH), it is possible to improve display quality and light resistance.

($Y^{11}$, $Y^{12}$, $Y^{13}$, and $Y^{14}$)

In the formula (3), bonding positions of $Y^{11}$ and $Y^{12}$ to the benzene ring are not limited. In other words, the bonding positions of $Y^{11}$ and $Y^{12}$ to the benzene ring may be any one of the ortho position, the meta position, or the para position. Similarly, in the formula (3), bonding positions of $Y^{13}$ and $Y^{14}$ to the benzene ring are not limited. In other words, the bonding positions of $Y^{13}$ and $Y^{14}$ to the benzene ring may also be any one of the ortho position, the meta position, or the para position. In the formula (3), the bonding positions of $Y^{11}$ and $Y^{12}$ to one benzene and the bonding positions of $Y^{13}$ and $Y^{14}$ to another benzene may be the same or different.

For example, $Y^{11}$, $Y^{12}$, $Y^{13}$, and $Y^{14}$ in the formula (3) are each independently a hydrogen group (-H), a hydroxy group (-OH), a halogen group, a carboxy group (-COOH), an ester group (-COOR), or a hydrocarbon group that may have a substituent. The halogen group and the hydrocarbon group that may have a substituent group are similar to $Y^{01}$ and $Y^{02}$ in the above formula (2), respectively.

In the formula (3), it is preferable that $Y^{11}$ and/or $Y^{13}$ be a hydroxy group (-OH). As a result of $Y^{11}$ and/or $Y^{13}$ being a hydroxy group (-OH), it is possible to improve display quality and light resistance

($Z^{01}$ and $Z^{02}$)

For example, $Z^{01}$ and $Z^{02}$ in the formula (2) are each independently a urea bond (-NHCONH-), an amide bond (-NHCO-, -OCHN-), or hydrazide bond (-NHCOCONH-). In terms of improving the high temperature and high humidity storage characteristic, it is preferable that $Z^{01}$ and $Z^{02}$ be an urea bond. In a case where $Z^{01}$ is an amide bond, nitrogen included in the amide bond may be bonded to benzene, or carbon included in the amide bond may be bonded to benzene. In a case where $Z^{02}$ is an amide bond, nitrogen included in the amide bond may be bonded to benzene, or carbon included in the amide bond may be bonded to benzene.

($Z^{11}$ and $Z^{12}$)

In the formula (3), $Z^{11}$ and $Z^{12}$ are each independently, for example, a urea bond (-NHCONH-), an amide bond (-NHCO-, -OCHN-), or a hydrazide bond (-NHCOCONH-). In terms of improving the high temperature and high humidity storage characteristic, it is preferable that $Z^{11}$ and $Z^{12}$ be a urea bond. In a case where $Z^{11}$ is an amide bond, the nitrogen included in the amide bond may be bonded to benzene, or the carbon included in the amide bond may be bonded to benzene.

(Specific example of a color developer)

For example, the color developer in which $X^0$ in the formula (2) and $X^1$ in the formula (3) each include one benzene ring specifically includes at least one type selected from a group including a compound expressed by the following

formulae (8-1) to (8-6).

[Chemical Formula 8]

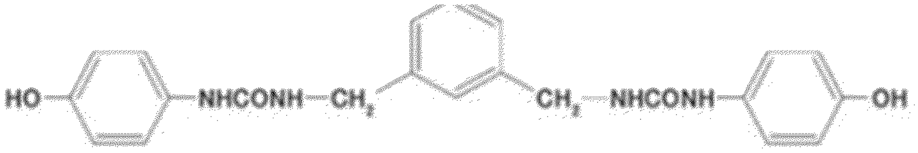
··· (8-1)

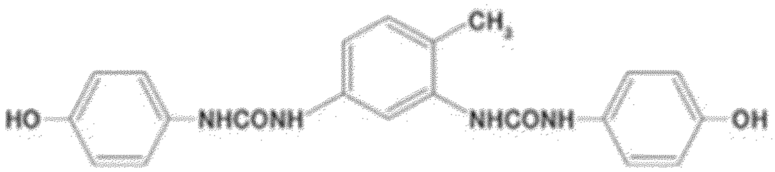
··· (8-2)

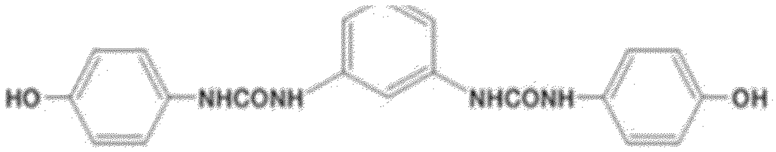
··· (8-3)

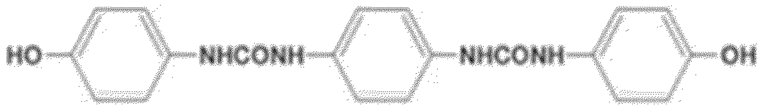
··· (8-4)

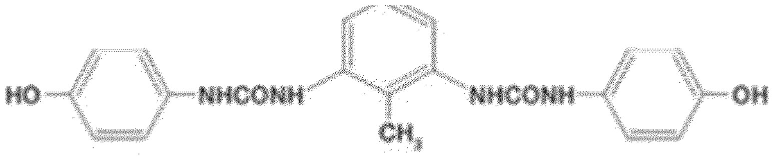
··· (8-5)

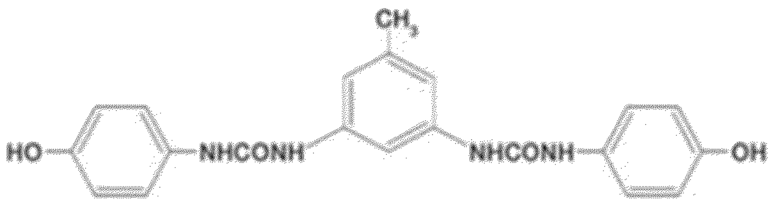
··· (8-6)

For example, the color developer in which $X^0$ in the formula (2) and $X^1$ in the formula (3) each include two benzene rings specifically includes at least one type selected from a group including a compound expressed by the following formulae (9-1) to (9-8).

[Chemical Formula 9]

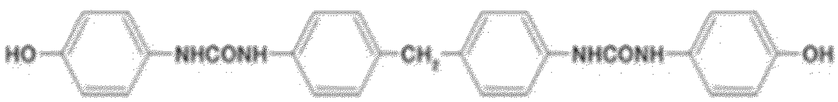
··· (9-1)

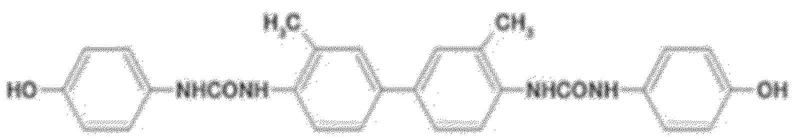
··· (9-2)

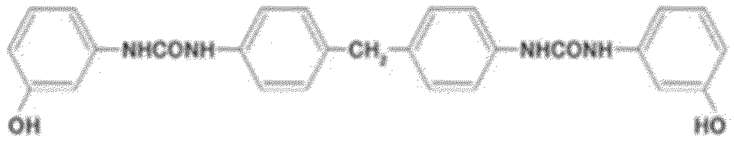 ··· (9-3)

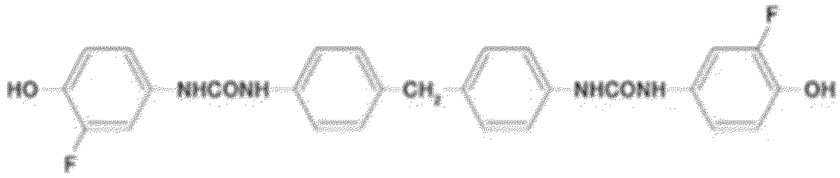 ··· (9-4)

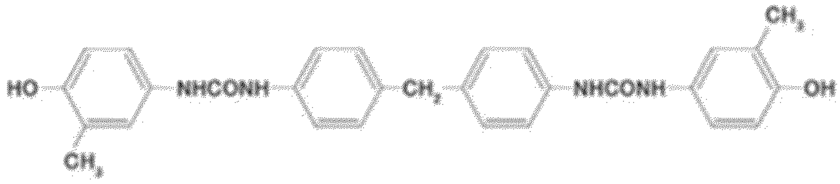 ··· (9-5)

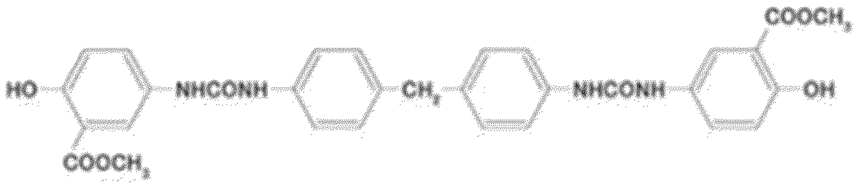 ··· (9-6)

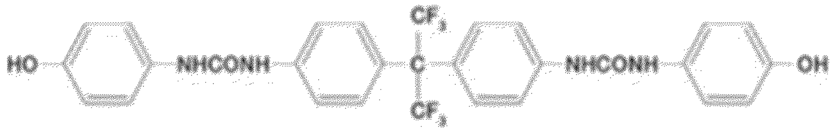 ··· (9-7)

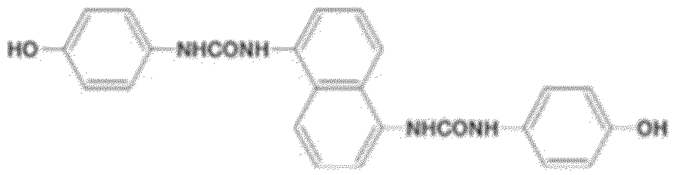 ··· (9-8)

It is preferable for the matrix polymer (matrix resin) to have a function as a binder. It is preferable that the matrix polymer allow a homogeneous dispersion of the coloring compound, the color developer, and the photothermal conversion agent. For example, as the matrix polymer, it is possible to give at least one type selected from a group including a thermosetting resin and a thermoplastic resin. Specifically, examples include one type selected from among a group including polyvinyl chloride resin, polyvinyl acetate resin, vinyl chloride-vinyl acetate copolymer resin, ethyl cellulose resin, polystyrene resin, styrene copolymer resin, phenoxy resin, polyester resin, aromatic polyester resin, polyurethane resin, polycarbonate resin, polyacrylic acid ester resin, polymethacrylic acid ester resin, acrylic acid copolymer resin, maleic acid polymerized resin, polyvinyl alcohol resin, modified polyvinyl alcohol resin, hydroxyethyl cellulose resin, carboxymethyl cellulose resin, and starch or the like.

It is preferable that the matrix polymer include a polycarbonate resin. The matrix polymer including a polycarbonate resin makes it possible to improve a light resistance of a texture of the recording medium 20. Here, the polycarbonate resin is a resin having a carbonate group (-O-(C=O)-O-) as a structural unit at least in the main chain. Therefore, a structural unit other than the carbonate group may be included in the main chain.

For example, the photothermal conversion agent used in the coloring layers 23, 25, and 27 absorbs light in a predetermined wavelength range in a near-infrared region, and generates heat. As a photothermal conversion agent, it is preferable to use, for example, a near-infrared absorbing dye having an absorption peak in a wavelength range of 700 nm or more and 2000 nm or less and having almost no absorption in a visible region. Specifically, for example, it is possible to give at least one type selected from a group including a compound having a phthalocyanine skeleton (phthalocyanine

dye), a compound having a squarylium skeleton (squarylium dye), and an inorganic compound or the like. As the inorganic compound, for example, it is possible to give at least one type selected from a group including a metal complex such as a dithio complex, a diimonium salt, an aminium salt, and an inorganic compound or the like. Examples of the inorganic compound include at least one type selected from a group including graphite, carbon black, metal powder particle, cobalt tetroxide, iron oxide, chromium oxide, copper oxide, titanium black, metal oxide such as ITO (Indium Tin Oxide), metal nitride such as niobium nitride, metal carbide such as tantalum carbide, metal sulfide, and various types of magnetic powder or the like. Other than this, a compound having a cyanine skeleton (cyanine dye) having excellent light resistance and heat resistance may be used. It is to be noted that excellent light resistance here means, for example, not causing decomposition when irradiated with fluorescent light or the like in a use environment. Excellent heat resistance means, for example, not causing a maximum absorption peak value of the absorption spectrum to change by 20% or more when, for example, a film is formed together with a polymer material and stored at, for example, 150°C for 30 minutes. As a compound having such a cyanine skeleton, for example, it is possible to give either a compound having any counterion among the $SbF_6$, $PF_6$, $BF_4$, $ClO_4$, $CF_3SO_3$, and $(CF_3SO_3)_2N$ in the molecule or a methine chain including a five-membered ring or six-membered ring, or both. It is to be noted that although it is preferable that the compound having a cyanine skeleton used in the recording medium 20 in the present embodiment have both one of the above counterions and a cyclic structure such as a five-membered ring and a six-membered ring in the methine chain, sufficient light resistance and heat resistance is ensured as long as at least the counterion or the cyclic structure is provided.

It is to be noted that as a photothermal conversion agent, it is preferable to select a photothermal conversion agent having a narrow light absorption band, for example, in a wavelength range of 700 nm or more and 2000 nm or less, and having a light absorption band that does not overlap each other in the coloring layers 23, 25, and 27. This makes it possible to selectively develop the color of the desired layer among the coloring layers 23, 25, and 27.

The intermediate layer 22 is provided between the base member 21 and the coloring layer 23. The intermediate layer 24 is provided between the coloring layer 23 and the coloring layer 25. The intermediate layer 26 is provided between the coloring layer 25 and the coloring layer 27. The intermediate layers 22, 24, and 26 may allow thermal insulation between each layer, and may allow suppression of diffusion of a constituent material.

For example, the intermediate layers 22, 24, and 26 include a polymeric material having general translucency. As a specific material, for example, it is possible to give one type selected from a group of acrylic resin, polyvinyl chloride resin, polyvinyl acetate resin, polyvinyl chloride-vinyl acetate copolymer resin, ethyl cellulose resin, polystyrene resin, styrene copolymer resin, phenoxy resin-based resin, polyester resin, aromatic polyester resin, polyurethane resin, polycarbonate resin, polyacrylic acid ester resin, polymethacrylate acid ester resin, acrylic acid copolymer resin, maleic acid polymerized resin, polyvinyl alcohol resin, modified polyvinyl alcohol resin, hydroxyethyl cellulose resin, carboxymethyl cellulose resin, and starch or the like. It is to be noted that the intermediate layers 22, 24, and 26 may include, for example, various additives such as a UV absorber.

The intermediate layers 22, 24, and 26 may be a UV-curable resin layer. The UV-curable resin layer includes a UV-curable resin composition that undergoes a polymerization reaction and solidifies. More specifically, for example, the UV-curable resin layer includes a polymer of a polymerizable compound and a polymerization initiator that is caused to generate active species upon irradiation with external energy (ultraviolet light) to result in a structural change. The UV-curable resin composition includes, for example, at least one type selected from a group including a radical polymerization type UV-curable resin composition and a cationic polymerization type UV-curable resin composition or the like. The UV-curable resin composition may include, as necessary, at least one type selected from a group including a sensitizer, a filler, a stabilizer, a leveling agent, a defoamer, and a viscosity adjuster or the like. The UV-curable resin composition may be a UV-curable resin composition for hard coating. The UV curable resin composition may be an acrylic UV-curable resin composition.

The intermediate layers 22, 24, and 26 may include an inorganic material having translucency. For example, it is preferable to use porous silica, alumina, titania, carbon, or a composite thereof because this allows low thermal conductivity and highly efficient thermal insulation. For example, it is possible to form the intermediate layers 22, 24, and 26 by a sol-gel method.

To suppress a generation of a physical step, the thickness of the intermediate layers 22, 24, and 26 may be adjusted to allow the recording medium 20 to have the same thickness as the spacer layer 13. Preferably, the intermediate layers 22, 24, and 26 have a thickness of 3 μm or more and 100 μm or less, and more preferably 5 μm or more and 50 μm or less. When the thickness of the intermediate layers 22, 24, and 26 is 3 μm or more, it is possible to obtain a sufficient thermal insulation effect. On the other hand, when the thickness of the intermediate layers 22, 24, and 26 is 100 μm or less, it is possible to suppress a decrease in translucency. In addition, it is possible to suppress a decrease in a bending resistance of the recording medium 20 and prevent a defect such as cracking from occurring.

The intermediate layers 22, 24, and 26 may include an adhesive. For example, the adhesive includes at least one type selected from a group including acrylic resin, silicone resin, urethane resin, epoxy resin, and an elastomer-based material or the like.

The protective layer 28 is intended to protect a surface of the recording medium 20 and is formed using, for

example, at least one type of a UV-curable resin or a thermosetting resin. The protective layer 28 may be a hard coat layer. To provide physical resistance, a matrix polymer or a plastic film similar to the base member 21 may be used for the protective layer 28. To compound a protective function, a plurality of protective layers may be bonded together using, for example, an adhesive. For example, the protective layer 28 has a thickness of 0.1 μm or more and 100 μm or less.

It is to be noted that, for example, as illustrated in FIG. 5, the recording medium 20 may include a laser marking layer 31 on an outermost surface of the recording medium 20. The laser marking layer 31 may have a common configuration with the laser marking layer described as the laser marking layer used for the base member 11. In addition, as illustrated in FIG. 6, for example, the recording medium 20 may also include a laser marking layer 32 between the base member 21 and the intermediate layer 22. The laser marking layer 32 may have a common configuration with the laser marking layer described as the laser marking layer used for the base member 11.

[Method of Manufacturing the Laminate 10]

In the following, an example of a method of manufacturing the laminate 10 according to one embodiment of the present disclosure is described.

First, a thermosetting resin is applied as a thermal adhesive to one main surface of the base member 11 to form the adhesive layer 12. Then, after the spacer layer 13 is disposed on the adhesive layer 12, the recording medium 20 is fitted into the housing section 13A of the spacer layer 13. It is to be noted that the spacer layer 13 in which the recording medium 20 is pre-fitted in the housing section 13A may be disposed on the adhesive layer 12. In addition, the adhesive layer 12 may be formed by applying a thermosetting resin to the spacer layer 13 in which the recording medium 20 is pre-fitted in the housing section 13A and then disposing the spacer layer 13 on the main surface of the base member 11 with a coating film therebetween. Alternatively, the adhesive layer 12 may be formed by bonding a sheet formed by previously applying a thermosetting resin to the separator or the like, to a main surface of the base member 11 or the spacer layer 13 in which the recording medium 20 is pre-fitted in the housing section 13A by a method such as thermal bonding.

Next, a thermosetting resin is applied as a thermal bonding agent to the spacer layer 13 to form an adhesive layer 14, and then an overlay layer 15 is disposed on the adhesive layer 14. The laminate 10 thus obtained is then sandwiched between metal plates and pressurized while being heated to thermoset the adhesive layer 14. In terms of reducing damage to the recording medium 20, it is preferable that the temperature applied to the laminate 10 during thermosetting be 100°C or more and 120°C or less. Thus, the intended laminate 10 is obtained. The adhesive layer 14 may be formed by applying a thermosetting resin to the overlay layer 15 and then disposing the overlay layer 15 on the spacer layer 13 with a coating film therebetween. In addition, the adhesive layer 14 may also be formed by bonding a sheet formed by previously applying a thermosetting resin to the separator or the like, to the overlay layer 15 or the spacer layer 13 by a method such as thermal bonding.

[Method of Recording on the Laminate 10]

For example, the laminate 10 according to the present embodiment allows a design or the like to be recorded on the recording medium 20 in the following manner. A case where the coloring layers 23, 25, and 27 represent cyan, magenta, and yellow colors, respectively, is described here as an example.

For example, the recording medium 20 is irradiated with an infrared ray having a specified wavelength and a specified output through the overlay layer 15 by a semiconductor laser or the like. Here, in a case of causing the coloring layer 23 to develop a color, the coloring layer 23 is irradiated with an infrared ray having a wavelength $\lambda_1$ with sufficient energy to cause the coloring layer 23 to reach the coloring temperature. This causes a photothermal conversion material included in the coloring layer 23 to generate heat and a coloring reaction (chromogenic reaction) occurs between the coloring compound and the color developer, resulting in color development of cyan at the irradiated portion.

Similarly, in a case of causing the coloring layer 25 to develop a color, the coloring layer 25 is irradiated with an infrared ray having a wavelength $\lambda_2$ with sufficient energy to cause the coloring layer 25 to reach the coloring temperature. **In** a case of causing the coloring layer 27 to develop a color, the coloring layer 27 is irradiated with an infrared ray having a wavelength $\lambda_3$ with sufficient energy to cause the coloring layer 27 to reach the coloring temperature. This causes a photothermal conversion material included in each of the coloring layer 25 and the coloring layer 27 to generate heat, and a coloring reaction occurs between the coloring compound and the color developer, resulting in color development of magenta and yellow, respectively, at the irradiated portion. Thus, it is possible to record a design or the like (for example, a full-color design or the like) as a result of irradiating any portion with an infrared ray of a corresponding wavelength.

[Modification Example A]

It is to be noted that in the laminate 10 according to the above embodiment, for example, as illustrated in FIG. 7, the recording medium 20 may be provided over an entire surface of the laminate 10 in plan view. At this time, for example,

as illustrated in FIG. 8, the spacer layer 13 is omitted in the laminate 10. It is to be noted that FIG. 7 illustrates a modification example of a perspective configuration of the laminate 10. FIG. 8 illustrates an example of a cross-sectional configuration of the laminate 10 of FIG. 7 at line A-A.

[Modification Example B]

In the laminate 10 according to the above embodiment, for example, as illustrated in FIG. 9, the adhesive layers 12 and 14 may be omitted, the base member 11 and the spacer layer 13 may be bonded to each other by fusion bonding, and the spacer layer 13 and the overlay layer 15 may be bonded to each other by fusion bonding.

At this time, it is preferable that the base member 11, the spacer layer 13, and the overlay layer 15 include a thermoplastic resin as a plastic. It is possible to increase an interlayer adhesion strength by fusion bonding as a result of the base member 11, the spacer layer 13, and the overlay layer 15 including a thermoplastic resin. In terms of reducing damage to the recording medium 20, it is preferable that the thermoplastic resin allow thermal bonding between the layers of the laminate 10 in a temperature range of 130°C or more and 200°C or less.

The base member 11, the spacer layer 13, and the overlay layer 15 may include the same type of thermoplastic resin, and it is not necessary for the base member 11, the spacer layer 13, and the overlay layer 15 to include the same type of thermoplastic resin. In a case where the base member 11, the spacer layer 13, and the overlay layer 15 do not include the same type of thermoplastic resin, one of the base member 11, the spacer layer 13, and the overlay layer 15 may include a different type of thermoplastic resin from the other two layers. In a case where the base member 11, the spacer layer 13, and the overlay layer 15 do not include the same type of thermoplastic resin, the base member 11, the spacer layer 13, and the overlay layer 15 may each include a different type of thermoplastic resin.

In a case where the base member 11, the spacer layer 13, and the overlay layer 15 include the same type of thermoplastic resin, it is preferable that the base member 11, the spacer layer 13, and the overlay layer 15 include at least one type selected from a group including a semi-crystalline thermoplastic resin and an amorphous thermoplastic resin in terms of improving interlayer adhesion strength by fusion bonding.

The semi-crystalline thermoplastic resin includes, for example, at least one type selected from a group including polypropylene (PP), polyethylene (PE), polyacetal (POM), polyethylene terephthalate (PET), polybutylene terephthalate (PBT), polyphenylene sulfide (PPS), and polyetheretherketone (PEEK ) or the like.

The amorphous thermoplastic resin includes, for example, at least one type selected from a group including ABS resin, polycarbonate (PC), a polymer alloy of ABS resin and PC (hereinafter, referred to as "ABS/PC polymer alloy"), AS resin, polystyrene (PS), polymethyl methacrylate (PMMA), polyphenylene oxide (PPO), polysulfone (PSU), polyvinyl chloride (PVC), polyetherimide (PEI), and polyethersulfone (PES) or the like.

In a case where the base member 11, the spacer layer 13, and the overlay layer 15 do not include the same type of thermoplastic resin, it is preferable that the base member 11, the spacer layer 13, and the overlay layer 15 include an amorphous thermoplastic resin in terms of improving interlayer adhesion strength by fusion bonding.

As a combination of amorphous thermoplastic resins included in each of the two adjacent layers of the laminate 10, the following combination is preferable. In a case where one of the two adjacent layers of the laminate 10 includes ABS resin, it is preferable that another layer include at least one type selected from a group including an ABS/PC polymer alloy, polycarbonate (PC), AS resin, polystyrene (PS), polymethyl methacrylate (PMMA), and polyvinyl chloride (PVC).

In a case where one of the two adjacent layers of the laminate 10 includes an ABS/PC polymer alloy, it is preferable that another layer include at least one type selected from a group including ABS resin, polycarbonate (PC), and polymethyl methacrylate (PMMA). In a case where one of the two adjacent layers of the laminate 10 includes polycarbonate (PC), it is preferable that another layer include at least one type selected from a group including ABS resin, an ABS/PC polymer alloy, and polymethyl methacrylate (PMMA).

In a case where one of the two adjacent layers of the laminate 10 includes AS resin, it is preferable that another layer include at least one type selected from a group including ABS resin, polystyrene (PS), polymethyl methacrylate (PMMA), and polyphenylene oxide (PPO). In a case where one of the two adjacent layers of the laminate 10 includes polystyrene (PS), it is preferable that another layer include at least one type selected from a group including AS resin and polyphenylene oxide (PPO).

In a case where one of the two adjacent layers of the laminate 10 includes polymethyl methacrylate (PMMA), it is preferable that another layer include at least one type selected from a group including ABS resin, an ABS/PC polymer alloy, AS resin, and polyphenylene oxide (PPO). In a case where one of the two adjacent layers of the laminate 10 includes polyphenylene oxide (PPO), it is preferable that another layer include at least one type selected from a group including polycarbonate (PC), AS resin, polystyrene (PS), and polymethyl methacrylate (PMMA).

In a case where one of the two adjacent layers of the laminate 10 includes polysulfone (PSU), it is preferable that another layer include polycarbonate (PC). In a case where one of the two adjacent layers of the laminate 10 includes polyvinyl chloride (PVC), it is preferable that another layer include ABS resin.

Next, an example of a manufacturing method of the laminate 10 according to the present modification example is

described. First, the recording medium 20 is disposed on one main surface of the base member 11. Then, the overlay layer 15 is disposed on the recording medium 20. Then, a laminate including the base member 11, the recording medium 20, and the overlay layer 15 is sandwiched between metal plates and pressurized while being heated to thermally bond the base member 11 and the recording medium 20 and to thermally bond the recording medium 20 and the overlay layer 15. In terms of reducing damage to the recording medium 20 and developing sufficient bonding strength, it is preferable that the temperature applied to the laminate during thermal bonding be 130°C or more and 200°C or less. Thus, the laminate 10 according to the present modification example is obtained.

[Modification Example C]

In the laminate 10, for example, as illustrated in FIG. 10, instead of the housing section 13A, a bottomed recess (housing section 13B), which is depressed in a thickness direction of the spacer layer 13, may be provided. In this case, the housing section 13B may be provided on one main surface on a side opposed to the overlay layer 15 out of both main surfaces of the spacer layer 13, or may be provided on one main surface on a side opposed to the base member 11.

[Modification Example D]

In the above embodiment and modification examples thereof, the recording medium 20 may include a coloring layer that enables multicolor display with a monolayer configuration. FIG. 11 illustrates an example of a cross-sectional configuration of the recording medium 20 that enables multicolor display with a monolayer configuration. The recording medium 20 according to the present modification example includes the base member 21, the coloring layer 29, and the protective layer 28 in this order.

The coloring layer 29 includes three types of microcapsules 29C, 29M, and 29Y each having a coloring hue different from each other. In other words, the coloring layer 29 includes three types of microcapsules 29C, 29M, and 29Y, each of which represents a color that is different from each other in the coloration state. The coloring layer 29 may include a first matrix polymer as appropriate. The three types of microcapsules 29C, 29M, and 29Y each include, for example, a coloring compound that represents a color different from each other (for example, cyan (C), magenta (M), and yellow (Y)), a color developer corresponding to each coloring compound, a photothermal conversion agent that absorbs light having a wavelength different from each other and generates heat, and a second matrix polymer. As a material for a microcapsule wall encapsulating the materials described above, it is preferable to use, for example, a material similar to that included in the intermediate layers 22, 24, and 26 in the above embodiment.

[Modification Example E]

In the above embodiment and modification examples thereof, the recording medium 20 may include a plurality of coloring layers that enables display in n or more colors (n is an integer of 4 or more). In this case, a first coloring layer to an nth coloring layer may each include a coloring compound having a coloring hue different from each other.

[Modification Example F]

In the above embodiment and modification examples thereof, an example in which the laminate 10 is applied to a card has been described. However, in the above embodiment and modification examples thereof, the laminate 10 may also be applied to a medical supply, an automotive part, an automobile, a toy, food, a cosmetic, clothing, a document (for example, a passport), an exterior component, or a housing for an electronic device, or the like. Specific examples of the exterior component include an interior or exterior of a wall or the like of a building, or an exterior of furniture such as a desk or the like. Specific examples of the electronic device include a personal computer (hereinafter referred to as a "PC"), a mobile device, a cellular phone (for example, a smartphone), a tablet computer, a display, a photographic device, an audio device, a gaming device, an industrial instrument, a medical device, a robot, or a wearable terminal or the like. Specific examples of the wearable terminal include a watch (wristwatch), a bag, clothing, a hat, glasses. or shoes, or the like.

The following describes specific examples of application of the laminate 10 to a smartphone, a notebook personal computer, and a cosmetic container.

[Application Example 1]

FIG. 12A illustrates an appearance configuration of a front surface of a smartphone 30, and FIG. 12B illustrates an appearance configuration of a back surface of the smartphone 30 illustrated in FIG. 12A. The smartphone 30 includes, for example, a display 33 and a housing 34. On the back surface side of the housing 34, the recording medium 20 is provided. The housing 34 includes the laminate 10. The laminate 10 has a configuration similar to the laminate 10 in any of

the above embodiment and modification examples thereof, except that the base member 11 has a shape of a housing for the smartphone 30. This makes it possible to improve an anti-counterfeiting characteristic or the like of the smartphone 30.

[Application Example 2]

FIG. 13 illustrates an appearance configuration of a notebook PC 40. The notebook PC 40 includes a computer body 41 and a display 42. The computer body 41 includes a housing 41a, a keyboard 41b, a wheel/pad control section 41c, and click buttons 41d and 41e. In the housing 41a, the recording medium 20 is provided. The housing 41a includes the laminate 10. The laminate 10 has a configuration similar to the laminate 10 in any of the above embodiment and modification examples thereof, except that the base member 11 has a shape of a housing for the notebook PC 40. This makes it possible to improve an anti-counterfeiting characteristic or the like of the notebook PC 40.

[Application Example 3]

FIG. 14 illustrates an appearance of a cosmetic container 50. The cosmetic container 50 includes a case 511 and a lid 59 covering the case 58. In the lid 59, the recording medium 20 is provided. The lid 59 includes the laminate 10. The laminate 10 has a configuration similar to the laminate 10 in any of the above embodiment and modification examples thereof, except that the base member 11 has a shape corresponding to the lid 59. This makes it possible to improve an anti-counterfeiting characteristic or the like of the cosmetic container 50.

[Application Example 4]

FIG. 15 illustrates an appearance of a booklet 60. The booklet 60 is a passport. A passport is an example of a booklet-type identification. The booklet 60 has a plurality of sheets 61. The plurality of sheets 61 is saddle-stitched. At least one or both surfaces of the sheets 61 include the recording medium 20 or the like. On the recording medium 2 or the like, a portrait or the like is drawn. The sheets 61 include a configuration similar to the laminate 10 in any of the above embodiment and modification examples thereof. In this case, the base member 11 may be paper or the like. This makes it possible to improve an anti-counterfeiting characteristic or the like of the booklet 60.

[Drawing Apparatus]

Next, a drawing apparatus as a recording apparatus that performs recording on the laminate 10 is described. FIG. 16 illustrates an example of a schematic configuration of a drawing apparatus 100 as a recording apparatus that performs recording on the laminate 10. The drawing apparatus 100 performs writing (drawing) of information on the recording medium 20 provided in the laminate 10. For example, the drawing apparatus 100 converts image data inputted from an outside and described in a device-dependent color space (hereinafter referred to as "input image data") into image data described in a color space of the recording medium 20 (hereinafter referred to as "image data for drawing"). Here, the device-dependent color space is, for example, an RGB color space such as sRGB or Adobe (registered trademark) RGB. The color space of the recording medium 20 is a color space characteristic of the recording medium 20. The drawing apparatus 100 further converts the image data for drawing obtained by the conversion into an output setting value of the drawing section 150 described below, and inputs the output setting value obtained by the conversion, to the drawing section 150, thereby performing drawing on the recording medium.

The drawing apparatus 100 includes, for example, a communication section 110, an input section 120, a display section 130, a memory section 140, a drawing section 150, and an information processing section 160. For example, the drawing apparatus 100 is coupled to a network via the communication section 110. The network is, for example, a communication line such as a LAN or WAN. For example, a terminal device is coupled to the network. For example, the drawing apparatus 100 is configured to allow communication with the terminal device via the network. For example, the terminal device is a portable terminal and is configured to allow communication with the drawing apparatus 100 via the network.

The communication section 110 communicates with an external device such as a terminal device. For example, the communication section 110 transmits input image data received from an external device such as a mobile terminal to the information processing section 160. The input image data is data in which a scale value of each drawing coordinate is described in a device-dependent color space. In the input image data, a scale value of each drawing coordinate includes, for example, an 8-bit red scale value, an 8-bit green scale value, and an 8-bit blue scale value.

The input section 120 accepts an input from a user (for example, an execution instruction, data input, etc.). The input section 120 transmits information inputted by the user to the information processing section 160. The display section 130 performs a screen display on the basis of various screen data generated by the information processing section 160. The display section 130 includes, for example, a liquid crystal panel or an organic EL (electroluminescence) panel or the

like.

For example, the memory section 140 holds various programs. The memory section 140 holds, for example, a program that converts input image data described in a device-dependent color space into image data for drawing described in the color space of the recording medium 20. For example, the image data for drawing is data in which the scale value of each drawing coordinate is described in the color space of the recording medium 20. In a case where the color space of the recording medium 20 is a leuco color space, the scale value of each drawing coordinate in the image data for drawing includes, for example, an 8-bit magenta scale value, an 8-bit cyan scale value, and an 8-bit yellow scale value. For example, the memory section 140 holds a program that derives an output setting value of the drawing section 150 for each drawing coordinate on the basis of the scale value of the image data for drawing obtained by the conversion. FIG. 16 illustrates these programs collectively as a program 141.

The information processing section 160 includes, for example, a CPU (Central Processing Unit) and a GPU (Graphics Processing Unit), and executes various programs (for example, the program 141) held in the memory section 140. For example, the information processing section 160 executes a series of procedures described in the program 141 as a result of loading the program141.

Next, the drawing section 150 is described. FIG. 17 illustrates an example of a schematic configuration of the drawing section 150. For example, the drawing section 150 includes a signal processing circuit 51, a laser driving circuit 52, a light source section 53, an X-scanner driving circuit 54, an X-scanner section 55, a Y-stage driving circuit 56, and a Y stage 57. The drawing section 150 performs drawing on the recording medium 20 by controlling an output of the light source section 53 on the basis of a voltage value file (a command voltage value list) inputted from the information processing section 160.

The signal processing circuit 51 obtains the voltage value file (the command voltage value list) inputted from the information processing section 160 as an image signal Din. For example, the signal processing circuit 51 generates from the image signal Din a pixel signal Dout corresponding to a scanning operation of the X-scanner section 55. The pixel signal Dout causes the light source section 53 (for example, each laser element 53A, 53B, or 53C described below) to output a laser beam having a power corresponding to a command voltage value. The signal processing circuit 51, together with the laser driving circuit 52, controls a peak height value or the like of an electric current applied to the light source section 53 (for example, each laser element 53A, 53B, or 53C) in accordance with the pixel signal Dout.

For example, the laser driving circuit 52 drives each laser element 53A, 53B, or 53C of the light source section 53 in accordance with the pixel signal Dout. For example, the laser driving circuit 52 controls a luminance (brightness/darkness) of the laser beam to draw an image in accordance with the pixel signal Dout. The laser driving circuit 52 includes, for example, a driving circuit 52A that drives the laser element 53A, a driving circuit 52B that drives the laser element 53B, and a driving circuit 52C that drives the laser element 53C. Each laser element 53A, 53B, and 53C performs drawing on the recording medium 20 by outputting a laser beam having a power corresponding to the command voltage value to the recording medium 20. Each laser element 53A, 53B, and 53C emits a laser beam in a near infrared region. For example, the laser element 53A is a semiconductor laser that emits a laser beam La having an emission wavelength $\lambda_1$. For example, the laser element 53B is a semiconductor laser that emits a laser beam Lb having an emission wavelength $\lambda_2$. For example, the laser element 53C is a semiconductor laser that emits a laser beam Lc having an emission wavelength $\lambda_3$.

The light source section 53 includes a plurality of laser elements (for example, three laser elements 53A, 53B, and 53C) each having a different emission wavelength in a near infrared region. Each laser element (for example, each laser element 53A, 53B, and 53C) generates a laser beam including a wavelength corresponding to an optical absorption wavelength band of the photothermal conversion agent included in the recording medium 20. The light source section 53 further includes, for example, an optical system that multiplexes a plurality of laser beams (for example, three laser beams La, Lb, and Lc) emitted from a plurality of laser elements (for example, the three laser elements 53A, 53B, and 53C). For example, this optical system outputs a multiplexed beam of the plurality of laser beams La, Lb, and Lc (a laser beam Lm) to the X-scanner section 55 to cause a plurality of irradiation spots Pa, Pb, and Pc generated on the recording medium 20 by the plurality of laser beams La, Lb, and Lc to overlap each other on the Y stage 57. An X-axis direction is a direction orthogonal to a moving direction of the Y stage 57 (Y-axis direction) and parallel to a scanning direction of a single-axis scanner 55a described below. As such an optical system, the light source section 53 includes, for example, two reflective mirrors 53a and 53d, and two dichroic mirrors 53b and 53c.

The laser beams La and Lb emitted from the two laser elements 53A and 53B are each caused to be an approximately parallel beam (collimated beam) by, for example, a collimating lens. Then, for example, the laser beam La is reflected by the reflective mirror 53a while being reflected by the dichroic mirror 53b, and the laser beam Lb is transmitted through the dichroic mirror 53b. Thus, the laser beams La and Lb are multiplexed. The multiplexed beam of the laser beam La and the laser beam Lb is transmitted through the dichroic mirror 53c.

For example, the laser beam Lc emitted by the laser element 53C is caused to be an approximately parallel beam (collimated beam) by a collimating lens. Then, for example, the laser beam Lc is reflected by the reflective mirror 53d while being reflected by the dichroic mirror 53c. Thus, the above multiplexed beam transmitted through the dichroic mirror 53c and the laser beam Lc reflected by the dichroic mirror 53c are multiplexed. For example, the light source section 53 outputs

the beam obtained by multiplexing (the laser beam Lm) to the X-scanner section 55 through the above optical system.

For example, the X-scanner driving circuit 54 drives the X-scanner section 55 on the basis of a control signal inputted from the signal processing circuit 51. **In** addition, for example, in a case where a signal regarding an irradiation angle of the single-axis scanner 55a described below or the like is inputted from the X-scanner section 55, the X-scanner driving circuit 54 drives the X-scanner section 55 to achieve a desired irradiation angle on the basis of the signal.

For example, the X-scanner section 55 scans the laser beam Lm entering from the light source section 53 in an X-axis direction on the surface of the recording medium 20. The X-scanner section 55 includes, for example, the single-axis scanner 55a and an fθ lens 55b. For example, the single-axis scanner 55a is a galvanometer mirror or a polygon mirror that scans the laser beam Lm entering from the light source section 53 in the X-axis direction on the surface of the recording medium 20 on the basis of a drive signal inputted from the X-scanner driving circuit 54. The fθ lens 55b converts a uniform rotational motion of the single-axis scanner 55a into a uniform linear motion of a spot moving on a focal plane (the surface of the recording medium 20).

For example, the Y-stage driving circuit 56 drives the Y stage 57 on the basis of a control signal inputted from the signal processing circuit 51. The Y stage 57 shifts the Y stage 57 in a Y-axis direction at a predetermined speed, thereby moving the laminate 10 (the recording medium 20) placed on the Y stage 57 in the Y-axis direction at a predetermined speed with respect to the X-scanner section 55. The X-scanner section 55 and the Y stage 57 cause the laser beam Lm to perform raster scanning across the surface of the laminate 10 (the recording medium 20) in a coordinated motion.

[Method of Forming a Drawn Object]

Next, an example of the method of forming a drawn object in the drawing apparatus 100 is described.

First, a user prepares the laminate 10 including the recording medium 20, a color of which is not yet developed, and places the laminate 10 on the Y stage 57. Next, the user transmits input image data described in an RGB color space from the terminal device to the drawing apparatus 100 via the network. Upon receiving the input image data via the network, the drawing apparatus 100 performs a drawing process as follows.

First, upon receiving input image data via the communication section 110, the information processing section 160 converts the input image data described in the RGB color space into leuco image data described in the leuco color space. Next, the information processing section 160 derives a voltage value file (a command voltage value list) on the basis of the scale values of each color at each drawing coordinate of the leuco image data obtained by the conversion. The information processing section 160 transmits the derived voltage value file (the command voltage value list) to the drawing section 150.

The signal processing circuit 51 of the drawing section 150 obtains the voltage value file (the command voltage value list) inputted from the information processing section 160 as the image signal Din. From the image signal Din, the signal processing circuit 51 synchronizes with the scanning operation of the X-scanner section 55 and generates an image signal corresponding to a characteristic such as a wavelength of the laser beam. In the generated image signal, the signal processing circuit 51 converts the image signal for one line corresponding to one scanning operation into a continuous signal that causes the laser beam to be outputted continuously over time. The signal processing circuit 51 outputs a projected image signal thus generated to the laser driving circuit 52 of the drawing section 150.

For example, the projected image signal is a signal that causes each laser element 53A, 53B, and 53C to continuously output a laser beam for one line over time. The projected image signal may be, for example, a signal that causes each laser element 53A, 53B, and 53C to intermittently output a laser beam for one line over time. However, when the laser element is driven by this projected image signal, the projected image signal at this time is a signal that causes a region corresponding to one line of the recording medium 20 to be continuously irradiated with a plurality of pulsed laser beams corresponding to one line.

The laser driving circuit 52 drives each laser element 53A, 53B, and 53C of the light source section 53 in accordance with the projected image signal corresponding to each wavelength. At this time, for example, the laser driving circuit 52 causes at least one laser beam among the laser beams La, Lb, and Lc to be emitted from at least one light source among the laser element 53A, the laser element 53B, and the laser element 53C. Thus, for example, it is possible to cause at least one laser beam among the laser beams La, Lb, and Lc to be generated from at least one light source among the laser element 53A, the laser element 53B, and the laser element 53C.

At this time, in a case where the projected image signal is a signal that causes each of the laser elements 53A, 53B, and 53C to continuously output a laser beam corresponding to one line over time, a laser beam corresponding to one line that is continuous over time is outputted from at least one light source among the laser elements 53A, 53B, and 53C as illustrated in FIG. 18(A), for example. As a result, for example, it is possible to form a linear drawing trace on the recording medium 20 as illustrated in FIG. 18(B).

In addition, in a case where the projected image signal is a signal that causes each of the laser elements 53A, 53B and 53C to intermittently output a laser beam corresponding to one line over time, a plurality of pulsed laser beams corresponding to one line is intermittently outputted over time as illustrated in FIG. 19(A), for example, from at least one light source among the laser element 53A, the laser element 53B, and the laser element 53C. At this time, as a result, for

example, it is possible to form a linear drawing trace on the recording medium 20 as illustrated in FIG. 19(B).

For example, in a case of developing a color of the coloring layer 23, the coloring layer 23 is irradiated with the laser beam La having an emission wavelength $\lambda_1$ with sufficient energy to cause the layer 23 to reach the coloring temperature. This causes a photothermal conversion agent included in the coloring layer 23 to generate heat and a coloring reaction (chromogenic reaction) occurs between the coloring compound and a color developer or reducer, resulting in color development of, for example, yellow at the irradiated portion. Similarly, in a case of developing a color of the coloring layer 25, the coloring layer 25 is irradiated with the laser beam Lb having an emission wavelength $\lambda_2$ with sufficient energy to cause the coloring layer 25 to reach the coloring temperature, resulting in color development of, for example, magenta at the irradiated area. In a case of coloring the coloring layer 27, the coloring layer 27 is irradiated with the laser beam Lc having an emission wavelength $\lambda_3$ with sufficient energy to cause the coloring layer 27 to reach the coloring temperature, resulting in color development of, for example, cyan at the irradiated portion. Thus, it is possible to record a design or the like (for example, a full-color design or the like) as a result of irradiating any portion with a laser beam having a corresponding wavelength.

A mechanism including the X-scanner driving circuit 54, the X-scanner section 55, the Y-stage driving circuit 56, and the Y stage 57 functions as a scanning section that projects the laser beam Lm generated by the light source section 53 onto the surface of the recording medium 20. This mechanism allows drawing on the recording medium 20 by irradiating the surface of the recording medium with at least one laser beam among the laser beams La, Lb, and Lc generated by the light source section 52 and scanning at least one laser beam among the laser beams La, Lb, and Lc over the surface of the recording medium 20.

It is preferable that the irradiation spot of the laser beam Lm have a size and shape that prevents overlapping of a high temperature region generated in and around the coloring layer 23 by the laser beam La included in the laser beam Lm and a high temperature region generated in and around the coloring layer 25 by the laser beam Lb included in the laser beam Lm. In addition, it is preferable that the irradiation spot of the laser beam Lm have a size and shape that prevents overlapping of the high temperature region generated in and around the coloring layer 25 by the laser beam Lb included in the laser beam Lm and a high temperature region generated in and around the coloring layer 27 by the laser beam Lc included in the laser beam Lm.

Next, a beam shape BP of each of the laser beams La, Lb, and Lc outputted from the drawing section 150 at the position of the recording medium 20 is described.

The beam shape BP is measured using a profiler "Model: NS2s-Pyro/9/5-PRO" and an application software "Nanoscan2 v2". A condition for measuring the beam shape BP of each laser beam by the profiler is as follows.

1. The single-axis scanner 55a of the X-scanner section 55 is tilted to 45 degrees and a center of the fθ lens 55b is adjusted to a position through which the beam passes.
2. An X axis of the profiler is adjusted to match a scanning axis of the single-axis scanner 55a of the X-scanner section 55.
3. A detector surface of the profiler is adjusted to a height position of the recording medium 20.
4. For stable measurement of the beam shape BP, an XY position of the beam shape BP on the detector surface is adjusted to X3000 μm and Y3000 μm while the beam is emitted, and then the beam shape BP is measured.

The following are configuration parameters of application software.

◦Parameters in Source tab

- Detector_ScanRate_10Hz_SamplingResolution_0.09μm
- Set up_AutoROI

◦Parameter in Profiles tab

- Display_AutoROI
- Scaling_Linear_1x
- HorizontalScailing_AutoZoom

◦Parameter in 2D/3D tab

- Scale_Linear
- Resolution_Medium
- Palette_CSIRainbow

◦Parameter in Pointing tab

- Display_Accumulate
- Tracking_Centroid
- Indicator_CrossHarf

◦Parameter in Capture tab

- CaptureMode_CW
- FrameAveraging_Average_6_Rolling_3

◦Parameter in Computations tab

- BeamWidthMethod_13.5%_50%(FWHM)_25%_50
- Position_Centroid_Peak
- Divergence/NumericalAperture_Divergence/NA_lens

◦Parameter in Power tab

- Results_TotalPower

◦Parameter in Charts tab

- TimeCharts_f(x)Width13.5%

◦Parameter in Logging tab

- LoggingRate_1.3/sec

◦Parameter in M2 tab

- None

FIG. 20 illustrates an example of the beam shape BP. The light source section 53 generates each of the laser beams La, Lb, and Lc to cause a beam shape of each of the laser beams La, Lb, and Lc at the position of the recording medium 20 to satisfy a relational expression below, and to cause a long-axis direction of the beam shape BP to be parallel to the scanning direction of the laser beams La, Lb, and Lc.

$$Ly \times 1.1 \leq Lx < Ly \times 5.0$$

$$d \times 0.8 \leq Ly \leq d \times 1.3$$

Lx: Length of the beam shape BP in a direction parallel to the scanning direction of the laser beams La, Lb, and Lc
Ly: Length of the beam shape BP in a direction orthogonal to the scanning direction of the laser beams La, Lb, and Lc
d: Pixel size

Here, Lx indicates a width of an irradiation spot of the laser beam La, the laser beam Lb, or the laser beam Lc in the X-axis direction at the position of the recording medium 20, in a region having a value equal to or less than half of a peak power value. In other words, Lx corresponds to a half width of the irradiation spot of the laser beam La in the X-axis direction. Ly indicates a width of the irradiation spot of the laser beam La, the laser beam Lb, or the laser beam Lc in the Y-axis direction at the position of the recording medium 20, in a region having a value equal to or less than half of the peak power value. It is possible to measure a size of the irradiation spot (beam size) using the above profiler and the above application software. It is to be noted that a beam size value described below is a value measured by the above profiler and the above application software. In other words, Ly corresponds to a half width of the irradiation spot in the Y-axis direction.

In addition, a pixel size d corresponds to a target line width and is expressed as 25400/R (μm). Here, R is a target resolution (dpi) in the recording medium 20. For example, in a case where the target resolution is 423 dpi, the pixel size d is

60 μm. In addition, for example, in a case where the target resolution is 508 dpi, the pixel size d is 50 μm.

For the drawing trace to have a target line width, it is necessary that the beam size (Ly) of the laser beam in a direction (Y-axis direction) orthogonal to a main scanning direction (X-axis direction) be -20% or more and +30% or less with respect to the pixel size d. In a case where the beam size (Ly) is too small, the width of the drawing trace becomes too narrow to achieve a desired optical density or a laser power density becomes too high, resulting in burning of the coloring layer or causing unintended coloring of an adjacent layer (crosstalk). In addition, in a case where the beam size (Ly) is too large, the laser power density is reduced, resulting in a longer drawing tact time or a thicker line width relative to the pixel size, thus causing image quality to deteriorate.

In addition, it is necessary for the beam size (Lx) of the laser beam in the main scanning direction (X-axis direction) to be longer than the beam size (Ly) and to be +110% or more and below +500% with respect to the beam size (Lx). In a case where the beam size (Lx) is too small, the laser power density becomes too high, resulting in burning of the coloring layer or causing unintended coloring of an adjacent layer (crosstalk). In addition, in a case where the beam size (Lx) is too large, the laser power density is reduced, making it difficult to obtain sufficient coloration without reducing a writing speed. FIG. 21 summarizes a relationship between the beam size (Lx, Ly) and a drawing characteristic. In a case where the beam size (Lx, Ly) satisfies the above relationship, drawing is sufficiently realized, and in a case where the beam size (Lx, Ly) does not satisfy the above relationship, a difficulty such as burning of an emitting layer, occurrence of crosstalk, or difficulty in obtaining the desired optical density occurs.

Meanwhile, in a case where the light source section 53 generates each of the laser beams La, Lb, and Lc to cause the long-axis direction of the beam shape BP to be parallel to the scanning direction of the laser beams La, Lb, and Lc, the following issue arises regarding a drawing characteristic of each of the laser beams La, Lb, and Lc. Specifically, for example, as illustrated in FIG. 22, in a case where a height (a position in a height direction) of the irradiation surface (the surface of the recording medium 20) for each of the laser beams La, Lb, and Lc is shifted from a predetermined height, the beam size (Ly) of the laser beam in the direction (Y-axis direction) orthogonal to the main scanning direction (X-axis direction) fluctuates significantly. In terms of reducing the fluctuation in image quality, this means a small drawing process margin with respect to the position of the recording medium 20.

Therefore, it is preferable that the light source section 53 generate each of the laser beams La, Lb, and Lc to allow a sufficient drawing process margin to be ensured. Specifically, it is preferable that the light source section 53 generate each of the laser beams La, Lb, and Lc to cause a beam shape of each of the laser beams La, Lb, and Lc at the position of the recording medium 20 to satisfy the above relationship, and to cause a long-axis of the beam shape BP to be greater than 0 degrees and equal to or less than 20 degrees with respect to a line segment (X axis) parallel to the scanning direction of the laser beams La, Lb, and Lc. FIG. 23 illustrates an example of the beam shape BP at this time. In FIG. 23, θ corresponds to an angle between the long axis of the beam shape BP and the line segment (X axis) parallel to the scanning direction of the laser beams La, Lb, and Lc (hereinafter referred to as "beam rotation angle").

FIG. 24 illustrates an example of a relationship between the height of the irradiation surface (the surface of the recording medium 20) and the beam size (Ly) when the beam rotation angle θ is 3 degrees. FIG. 24 shows that setting the beam rotation angle θ to 3 degrees suppresses a significant fluctuation in the beam size (Ly) even in a case where the height of the irradiation surface (the surface of the recording medium 20) of each of the laser beams La, Lb, and Lc is shifted from a predetermined height. It is to be noted that when the beam rotation angle θ is 0 degrees, an edge of a drawing trace DL has a semicircular shape as illustrated in FIG. 25(A), for example. On the other hand, as illustrated in FIG. 25(B), for example, when the beam rotation angle θ is greater than 0 degrees and equal to or less than 20 degrees, the edge of the drawing trace DL has a partially elliptical shape.

FIG. 26 illustrates an example of an evaluation result of image quality when tested under a condition of 1 to 24. The condition described as "GOOD" in FIG. 26 shows that a maximum OD value is 1.0 or higher, no crosstalk occurs, and a DOF (depth of focus) is greater than 100 μm, 200 μm, 300 μm, or 500 μm. FIG. 26 shows a large DOF of the laser beam La, Lb, or Lc under the "GOOD" condition. Accordingly, it is possible to consider that the drawing process margin for the position of the recording medium 20 is large.

In terms of a magnitude of the DOF in FIG. 26, the condition of tests 11-15 in which the DOF is greater than 200 (that is, θ is 0.5 degrees or more and 20 degrees or less) is preferable. In addition, the condition of tests 12-15 in which the DOF is greater than 300 (that is, θ is 1 degree or more and 20 degrees or less) is more preferable, and the condition of tests 12, 13, and 14 in which the DOF is greater than 500 (that is, θ is 1 degree or more and 10 degrees or less) is more preferable.

Next, a method of adjusting the beam rotation angle θ is described.

FIG. 27 illustrates an example of an optical configuration of the light source section 53. The light source section 53 includes a laser element 151, a collimator 152, and a cylinder 153, 154, 155, or 156.

The laser element 151 is one of the laser elements 53A, 53B, and 53C described above. The laser element 151 has an image-forming relationship with the surface of the recording medium 20, which is the irradiation surface. The laser element 151 has an oscillation wavelength of 860 nm, an emitter size of 150 μm, and a beam divergence angle (FWHM) of 36 degrees in a vertical direction (X-direction) and 7 degrees in a horizontal direction (Y-direction). For a light collecting position in the X-direction, a distance between cylinders 155 and 156 is adjusted, and for a light collecting position in the Y-direction, a distance between cylinders 153 and 154 is adjusted, thereby causing the laser beam emitted from the laser element 151 to be focused on the surface of the recording medium 20, which is the irradiation surface.

FIG. 28 illustrates an example of the rotation angle when a Z axis is assumed as a rotation axis in a case where the light source section 53 includes the laser element 151, the collimator 152, and the cylinders 153, 154, 155, and 156. In FIG. 28, Example 1 is a case where the laser element 151 is rotated -2.3 degrees with respect to the Z axis, and Example 2 is a case where the cylinder 154 is rotated +0.7 degrees with respect to the Z-axis and the cylinder 156 is rotated +0.7 degrees with respect to the Z axis. In FIG. 28, Example 3 is a case where the cylinder 153 is rotated -3.0 degrees with respect to the Z-axis and the cylinder 155 is rotated -1.0 degrees with respect to the Z axis, and Example 4 is a case where the laser element 151 is rotated by -2.0 degrees with respect to the Z axis and the cylinder 153 is rotated by +1.0 degrees with respect to the Z axis. In any of the Examples, it is possible to adjust the beam rotation angle $\theta$ to a desired angle.

It is to be noted that the relationship between the laser element 151 and the surface of the recording medium 20, which is the irradiation surface, may be out of the image-forming relationship. Even in such a case, it is possible to adjust the beam rotation angle $\theta$ to the desired angle.

FIG. 29 illustrates an example of a mechanism 157 intended to rotate the laser element 151 with respect to the Z axis and an example of a mechanism 158 intended to rotate the cylinder 156 with respect to the Z axis. Both mechanisms 157 and 158 are fixed on a base 159.

The mechanism 157 includes a support section 157a fixed to the base 159 and supporting the laser element 151 via a position adjuster 157b described below, and the position adjuster 157b supported by the support section 157a and intended to adjust the position of the laser element 151. The mechanism 157 further includes a stem fixing section 157c fixed to the position adjuster 157b and intended to fix a metal stem of the laser element 151, and a cap support section 157d fixed to the stem fixing section 157c and supporting a metal cap of the laser element 151. The mechanism 157 further includes a rotation angle adjuster 157e intended to adjust the rotation angle of the stem fixing section 157c in the Z-axis direction and a heat sink 157f fixed to the position adjuster 157b and intended to dissipate heat emitted from the laser element 151. The position adjuster 157b has an opening 157g at a point corresponding to a lead of the laser element 151.

The mechanism 158 includes a support section 158a fixed to the base 159 and supporting the cylinder 156 via a position adjuster 158b described below, and the position adjuster 158b pivotably supported by the support section 158a and intended to adjust the position of the cylinder 156. The cylinder 156 is fixed to the position adjuster 158b. The mechanism 158 further includes a support section 158c fixed to the support section 158a while being disposed apart from the position adjuster 158b, and supporting a rotation angle adjuster 158d described below. The mechanism 158 further includes the rotation angle adjuster 158d pivotably supported by the support section 158c and intended to adjust the rotation angle of the cylinder 156 in the Z-axis direction. The support section 158a and the position adjuster 158b have an opening 158e at a point through which a laser beam from the laser element 151 is transmitted.

[Effects]

Next, effects of the drawing system 100 are described.

In recent years, to improve security, it has been considered to provide a recording medium that allows any image to be drawn in a non-contact manner inside various ID cards, such as a passport or a driver’s license. Currently, a dominant recording medium commercialized for such an application is a recording medium that allows drawing in a single color. It is to be noted that, for example, Patent Literatures 1 to 3 each disclose a technique for drawing an image on a recording medium using a laser beam.

Meanwhile, colorization of a recording medium is expected to further improve security. However, in colorization of a recording medium, there is a difficulty of low image quality and drawing tact time compared with an existing ink jet method or a thermal transfer method.

Whereas, in the present embodiment, at least one laser beam among the laser beams La, Lb, and Lc is generated to cause a beam shape of the at least one laser beam among the laser beams La, Lb, and Lc at the position of the recording medium 20 to satisfy the above relational expression, and to cause a long-axis direction of the beam shape to be parallel to the scanning direction of the laser beams. Compared with a case where the beam shape is circular or square under a condition of the same beam power density or beam area, this makes it possible to suppress an interference (crosstalk) in a plurality of coloring layers, to ensure a wider color gamut, and further to perform highly efficient drawing. As a result, it is possible to achieve a balance between high image quality and short tact time.

**In** addition, in the present embodiment, at least one laser beam among the laser beams La, Lb, and Lc is generated to cause a beam shape of the at least one laser beam among the laser beams La, Lb, and Lc at the position of the recording medium 20 to satisfy the above relational expression, and to cause the long-axis direction of the beam shape to be greater than 0 degrees and equal to or less than 20 degrees with respect to the scanning direction of the laser beams. Compared with a case where the beam shape is circular or square under a condition of the same beam power density or beam area, this makes it possible to suppress an interference (crosstalk) in a plurality of coloring layers, to ensure a wider color gamut, and further to perform highly efficient drawing. As a result, it is possible to achieve a balance between high

image quality and short tact time. In addition, it is also possible to increase the drawing process margin for the position of the recording medium as a result of generating at least one laser beam among the laser beams La, Lb, and Lc to cause the beam shape in the long-axis direction to be greater than 0 degrees and equal to or less than 20 degrees with respect to the scanning direction of the laser beams.

<2. Modification Example>

In the following, some modification examples of the drawing apparatus 100 according to an embodiment of the present disclosure are described.

[Modification Example α]

In the drawing apparatus 100 according to the above embodiment, the light source section 53 may generate at least two laser beams among the laser beams La, Lb, and Lc to cause a beam shape of each of the at least two laser beams at the position of the recording medium 20 to satisfy the above relational expression, and to cause the long-axis direction of the beam shape BP to be parallel to the scanning direction of the laser beams La, Lb, Lc. Even in this case, it is possible to obtain an effect similar to that of the above embodiment.

In addition, in the drawing apparatus 100 according to the above embodiment, the light source section 53 may generate each of the laser beams La, Lb, and Lc to cause a beam shape of each of the laser beams La, Lb, and Lc at the position of the recording medium 20 to satisfy the above relational expression, and to cause the long-axis direction of the beam shape BP to be parallel to the scanning direction of the laser beams La, Lb, and Lc. Even in such a case, it is possible to obtain an effect similar to that of the above embodiment.

[Modification Example β]

In the drawing apparatus 100 according to the above embodiment, for example, as illustrated in FIG. 30, the light source section 53 may generate a plurality of laser beams La, Lb, and Lc to cause the plurality of laser beams La, Lb, and Lc to be scanned on the surface of the recording medium 20 in a state where the irradiation spots by the plurality of laser beams La, Lb, and Lc are arranged at a predetermined interval in a direction intersecting the scanning direction of the plurality of laser beams La, Lb, and Lc at an angle greater than 0 degrees and less than 90 degrees. For example, as illustrated in FIG. 31, the laser beams La, Lb, and Lc may be scanned in the X-axis direction via a predetermined interval in a direction orthogonal to the X-axis direction (Y-axis direction). In addition, as illustrated in FIG. 32, for example, the laser beams La, Lb, and Lc may be scanned in the X-axis direction via the predetermined interval in a direction diagonally intersecting the X-axis direction and the Y-axis direction.

Here, in the dichroic mirror 53b, a spot at which the laser beam La is reflected and a spot through which the laser beam Lb is transmitted may overlap each other. In this case, an optical system is configured to cause the optical axis of the laser beam La reflected by the dichroic mirror 53b and the optical axis of the laser beam Lb transmitted through the dichroic mirror 53b to intersect at a predetermined angle.

In addition, in the dichroic mirror 53b, the spot at which the laser beam La is reflected and the spot through which the laser beam Lb is transmitted may be shifted from each other without completely overlapping each other. In addition, in the dichroic mirror 53b, the spot at which the laser beam La is reflected and the spot through which the laser beam Lb is transmitted may be separated from each other. In these cases, the optical system may be configured to cause the optical axis of the laser beam La reflected by the dichroic mirror 53b and the optical axis of the laser beam Lb transmitted through the dichroic mirror 53b to intersect at a predetermined angle, or the optical system may be configured to cause the optical axes to be parallel to each other.

In the dichroic mirror 53c, the optical system is configured to cause the spot through which the laser beam La or the laser beam Lb is transmitted and the spot at which the laser beam Lc is reflected to be shifted from each other without completely overlapping each other. In the dichroic mirror 53c, the spot through which the laser beam La is transmitted, the spot through which the laser beam Lb is transmitted, and the spot through which the laser beam Lc is reflected may be arranged to be gradually shifted from each other in a predetermined direction. In the dichroic mirror 53c, the spot through which the laser beam La is transmitted, the spot through which the laser beam Lb is transmitted, and the spot at which the laser beam Lc is reflected may be arranged via the predetermined interval.

In these cases, the optical system may be configured to cause the optical axis of the laser beam La transmitted through the dichroic mirror 53c, the optical axis of the laser beam Lb transmitted through the dichroic mirror 53c, and the optical axis of the laser beam Lc reflected by the dichroic mirror 53c to intersect with each other at a predetermined angle. At this time, the light source section 53 outputs a plurality of laser beams La, Lb, and Lc to the X-scanner section 55 in a state where the optical axes of the plurality of laser beams La, Lb, and Lc are shifted from each other, while outputting the plurality of laser beams La, Lb, and Lc to the X-scanner section 55 to cause the optical axes of the plurality of laser beams

La, Lb, and Lc to intersect with each other at a predetermined angle.

In addition, the optical system may be configured to cause the optical axis of the laser beam La transmitted through the dichroic mirror 53c, the optical axis of the laser beam Lb transmitted through the dichroic mirror 53c, and the optical axis of the laser beam Lc reflected by the dichroic mirror 53c to be parallel to each other. At this time, the light source section 53 outputs the plurality of laser beams La, Lb, and Lc to the X-scanner section 55 in a state where the optical axes of the plurality of laser beams La, Lb, and Lc are shifted from each other, while outputting the plurality of laser beams La, Lb, and Lc to the X-scanner section 55 to cause the optical axes of the plurality of laser beams La, Lb, and Lc to be parallel to each other via the predetermined interval.

In the present modification example, the plurality of laser beams La, Lb, and Lc is scanned on the surface of the recording medium 20 in a state where the irradiation spots by the plurality of laser beams La, Lb, and Lc are arranged at a predetermined interval in a direction intersecting the scanning direction of the plurality of laser beams La, Lb, and Lc. This makes it possible to realize raster scanning while reducing an occurrence of thermal crosstalk.

[Modification Example γ]

FIG. 33 illustrates a modification example of a schematic configuration of the drawing system 100 according to the above embodiment. In the above embodiment, raster scanning is realized by causing the X-scanner section 55 to scan the laser beams La, Lb, and Lc in the X-axis direction while moving the Y stage 57 in the Y-axis direction. However, in the above embodiment and modification examples thereof, as illustrated in FIGs. 33 and 34, for example, raster scanning may be realized by using an XY-scanner driving circuit 54A, an XY-scanner section 55A, and a fixation stage 57A instead of the X-scanner driving circuit 54, the X-scanner section 55, the Y-stage driving circuit 56, and the Y stage 57.

For example, the XY-scanner driving circuit 54A drives the XY-scanner section 55A on the basis of a control signal inputted from the signal processing circuit 51. **In** addition, for example, in a case where a signal regarding an irradiation angle of a two-axis scanner 55c described below or the like is inputted from the XY-scanner section 55A, the XY-scanner driving circuit 54A drives the XY-scanner section 55A to cause the irradiation angle to be a desired irradiation angle on the basis of the signal.

For example, the XY-scanner section 55A scans the laser beams La, Lb, and Lc entering from the light source section 53 in the X-axis direction on the surface of the recording medium 20 while moving the scan line in the Y-axis direction at a predetermined step width. The XY-scanner section 55A includes, for example, the two-axis scanner 55c and the fθ lens 55b. The two-axis scanner 55c is, for example, a galvanometer mirror that causes the laser beams La, Lb, and Lc entering from the light source section 53 to be scanned on the surface of the recording medium 20 in the X-axis direction on the basis of the drive signal inputted from the XY-scanner driving circuit 54A, and moves the scan line in the Y-axis direction at a predetermined step width. The fθ lens 55b converts a uniform rotational motion of the two-axis scanner 55c into a uniform linear motion of a spot moving on a focal plane (the surface of the recording medium 20). The fixation stage 57A is a platform that simply supports the recording medium 20.

In the present modification example, the XY-scanner section 55A is provided that scans a plurality of laser beams La, Lb, and Lc in the X-axis direction and moves the scan lines of the plurality of laser beams La, Lb, and Lc in the Y-axis direction at a predetermined step width. This makes it possible to realize raster scanning while reducing an occurrence of thermal crosstalk.

In addition, in the present modification example, raster scanning is performed by scanning a plurality of laser beams La, Lb, and Lc in the X-axis direction and moving the scan lines of the plurality of laser beams La, Lb, and Lc in the Y-axis direction at a predetermined step width in a state where the recording medium 20 is stationary. This makes it possible to realize raster scanning while reducing an occurrence of thermal crosstalk.

Some embodiments, modification examples, and application examples of the present disclosure have been specifically described above. However, the present disclosure is not limited to the embodiments, modification examples, and application examples described above, and various modifications are possible based on the technical ideas of the present disclosure.

For example, the configurations, methods, processes, shapes, materials, and numerical values, etc. mentioned in the above embodiments, modification examples, and application examples are merely examples, and different configurations, methods, processes, shapes, materials, and numerical values other than these may be used as appropriate. It is possible to combine the configurations, methods, processes, shapes, materials, and numerical values of the above embodiments, modification examples, and application examples with each other as long as they do not depart from the spirit of the present disclosure.

In the numerical value range described stepwise in the above embodiments, modification examples, and application examples, the upper or lower limit of the numerical value range for one step may be replaced by the upper or lower limit of the numerical value range for another step. Unless otherwise specified, it is possible to use one of the materials illustrated in the above embodiments, modification examples and applications alone or in combination of two or more materials.

It is to be noted that the effects described herein are examples only. The effects of the present disclosure are not limited to the effects described herein. The present disclosure may have effects other than those described herein.
In addition, for example, the present disclosure may have the following configuration.

(1) A drawing apparatus that performs drawing on a recording medium in which a plurality of coloring layers is stacked via an intermediate layer, the plurality of coloring layers each including a coloring compound different from each other and a photothermal conversion agent different from each other, the drawing apparatus including:

a light source section that generates a plurality of laser beams each having a wavelength different from each other, the wavelength corresponding to an absorption wavelength of the photothermal conversion agent; and
a scanning section that irradiates a surface of the recording medium with the plurality of laser beams generated by the light source section, the scanning section also scanning the plurality of laser beams on the surface of the recording medium, in which
the light source section generates at least one laser beam among the plurality of laser beams to cause a beam shape of the at least one laser beam at a position of the recording medium to satisfy a relational expression below, and to cause a length of the beam shape in a direction parallel to a scanning direction of the laser beams to be 0 degrees or more and 20 degrees or less with respect to the scanning direction of the laser beams:

(Expression)

$$Ly \times 1.1 \leq Lx < Ly \times 5.0$$

$$d \times 0.8 \leq Ly \leq d \times 1.3$$

Lx: Length of the beam shape in a direction parallel to the scanning direction of the laser beams
Ly: Length of the beam shape in a direction orthogonal to the scanning direction of the laser beams
d: Pixel size.

(2) The drawing apparatus according to (1), in which
the light source section generates at least two laser beams among the plurality of laser beams to cause a beam shape of the at least two laser beams at a position of the recording medium to satisfy the relational expression, and to cause a length of the beam shape in a direction parallel to the scanning direction of the laser beams to be 0 degrees or more and 20 degrees or less with respect to the scanning direction of the laser beams.
(3) The drawing apparatus according to (1), in which
the light source section generates each of the laser beams to cause a beam shape of each of the laser beams at a position of the recording medium to satisfy the relational expression, and to cause a length of the beam shape in a direction parallel to the scanning direction of the laser beams to be 0 degrees or more and 20 degrees or less with respect to the scanning direction of the laser beams.
(4) The drawing apparatus according to (1), in which
the light source section generates the plurality of laser beams to cause a long-axis direction of the beam shape to be 0.5 degrees or more and 20 degrees or less with respect to the scanning direction of the laser beams.
(5) The drawing apparatus according to (1), in which
the light source section generates the plurality of laser beams to cause a long-axis direction of the beam shape to be one degree or more and 10 degrees or less with respect to the scanning direction of the laser beams.
(6) The drawing apparatus according to any one of (1) to (5), further including a rotation mechanism, in which

the light source section includes a plurality of laser elements that generates the plurality of laser beams, and
the rotation mechanism rotates at least one laser element among the plurality of laser elements, thereby enabling rotation of a long-axis direction of the beam shape of the laser beam generated by the rotated at least one laser element.

(7) The drawing apparatus according to any one of (1) to (6), in which
the scanning section includes an optical system and a stage, the optical system scanning the plurality of laser beams in a first direction, and the stage moving the recording medium in a second direction orthogonal to the first direction.
(8) The drawing apparatus according to any one of (1) to (6), in which
the scanning section includes an optical system, the optical system scanning the plurality of laser beams in a first direction and moving a scan line of the plurality of laser beams in a second direction orthogonal to the first direction at a

predetermined step width.

(9) The drawing apparatus according to any one of (1) to (6), in which the light source section generates the plurality of laser beams to cause the plurality of laser beams to be scanned on the surface of the recording medium, the plurality of laser beams being scanned in a state where an irradiation spot by the plurality of laser beams is arranged at a predetermined interval in a direction intersecting the scanning direction of the plurality of laser beams.

(10) A method of forming a drawn obj ect by performing drawing on a recording medium in which a plurality of coloring layers is stacked via an intermediate layer, the plurality of coloring layers each including a coloring compound different from each other and a photothermal conversion agent different from each other, the method including:

generating a plurality of laser beams each having a wavelength different from each other, the wavelength corresponding to an absorption wavelength of the photothermal conversion agent; and

performing drawing on the recording medium by irradiating a surface of the recording medium with the plurality of laser beams generated by the light source section and also by scanning the plurality of laser beams over the surface of the recording medium; wherein

the generating the plurality of laser beams including generating at least one laser beam among the plurality of laser beams to cause a beam shape of the at least one laser beam at a position of the recording medium to satisfy a relational expression below, and to cause a length of the beam shape in a direction parallel to a scanning direction of the laser beams to be 0 degrees or more and 20 degrees or less with respect to the scanning direction of the laser beams:

(Expression)

$$Ly \times 1.1 \leq Lx < Ly \times 5.0$$

$$d \times 0.8 \leq Ly \leq d \times 1.3$$

Lx: Length of the beam shape in a direction parallel to the scanning direction of the laser beams
Ly: Length of the beam shape in a direction orthogonal to the scanning direction of the laser beams
d: Pixel size.

In a drawing apparatus according to a first aspect of the present disclosure and a method of forming a drawn object according to a second aspect of the present disclosure, at least one laser beam among a plurality of laser beams is generated to cause a beam shape of the at least one laser beam among the plurality of laser beams at the position of the recording medium to satisfy the relationship described earlier, and to cause a length of the beam shape in a direction parallel to the scanning direction of the laser beams to be 0 degrees or more and 20 degrees or less with respect to the scanning direction of the laser beams. Compared with a case where the beam shape is circular or square under a condition of the same beam power density or beam area, this makes it possible to suppress an interference (crosstalk) in a plurality of coloring layers, to ensure a wider color gamut, and further to perform highly efficient drawing. As a result, it is possible to achieve a balance between high quality and short tact time.

The present application claims the benefit of Japanese Priority Patent Application JP2022-171761 filed with the Japan Patent Office on October 26, 2022, the entire contents of which are incorporated herein by reference.

It should be understood by those skilled in the art that various modifications, combinations, sub-combinations and alterations may occur depending on design requirements and other factors insofar as they are within the scope of the appended claims or the equivalents thereof.

## Claims

**1.** A drawing apparatus that performs drawing on a recording medium in which a plurality of coloring layers is stacked via an intermediate layer, the plurality of coloring layers each including a coloring compound different from each other and a photothermal conversion agent different from each other, the drawing apparatus comprising:

a light source section that generates a plurality of laser beams each having a wavelength different from each other, the wavelength corresponding to an absorption wavelength of the photothermal conversion agent; and

a scanning section that irradiates a surface of the recording medium with the plurality of laser beams generated by the light source section, the scanning section also scanning the plurality of laser beams on the surface of the

recording medium, wherein
the light source section generates at least one laser beam among the plurality of laser beams to cause a beam shape of the at least one laser beam at a position of the recording medium to satisfy a relational expression below, and to cause a length of the beam shape in a direction parallel to a scanning direction of the laser beams to be 0 degrees or more and 20 degrees or less with respect to the scanning direction of the laser beams:

(Expression)

$$Ly \times 1.1 \leq Lx < Ly \times 5.0$$

$$d \times 0.8 \leq Ly \leq d \times 1.3$$

Lx: Length of the beam shape in a direction parallel to the scanning direction of the laser beams
Ly: Length of the beam shape in a direction orthogonal to the scanning direction of the laser beams
d: Pixel size.

**2.** The drawing apparatus according to claim 1, wherein
the light source section generates at least two laser beams among the plurality of laser beams to cause a beam shape of the at least two laser beams at a position of the recording medium to satisfy the relational expression, and to cause a length of the beam shape in a direction parallel to the scanning direction of the laser beams to be 0 degrees or more and 20 degrees or less with respect to the scanning direction of the laser beams.

**3.** The drawing apparatus according to claim 1, wherein
the light source section generates each of the laser beams to cause a beam shape of each of the laser beams at a position of the recording medium to satisfy the relational expression, and to cause a length of the beam shape in a direction parallel to the scanning direction of the laser beams to be 0 degrees or more and 20 degrees or less with respect to the scanning direction of the laser beams.

**4.** The drawing apparatus according to claim 1, wherein
the light source section generates the plurality of laser beams to cause a long-axis direction of the beam shape to be 0.5 degrees or more and 20 degrees or less with respect to the scanning direction of the laser beams.

**5.** The drawing apparatus according to claim 1, wherein
the light source section generates the plurality of laser beams to cause a long-axis direction of the beam shape to be one degree or more and 10 degrees or less with respect to the scanning direction of the laser beams.

**6.** The drawing apparatus according to claim 1, further comprising a rotation mechanism, wherein

the light source section includes a plurality of laser elements that generates the plurality of laser beams, and
the rotation mechanism rotates at least one laser element among the plurality of laser elements, thereby enabling rotation of a long-axis direction of the beam shape of the laser beam generated by the rotated at least one laser element.

**7.** The drawing apparatus according to claim 1, wherein
the scanning section includes an optical system and a stage, the optical system scanning the plurality of laser beams in a first direction, and the stage moving the recording medium in a second direction orthogonal to the first direction.

**8.** The drawing apparatus according to claim 1, wherein
the scanning section includes an optical system, the optical system scanning the plurality of laser beams in a first direction and moving a scan line of the plurality of laser beams in a second direction orthogonal to the first direction at a predetermined step width.

**9.** The drawing apparatus according to claim 1, wherein
the light source section generates the plurality of laser beams to cause the plurality of laser beams to be scanned on the surface of the recording medium, the plurality of laser beams being scanned in a state where an irradiation spot by the plurality of laser beams is arranged at a predetermined interval in a direction intersecting the scanning direction of the plurality of laser beams.

**10.** A method of forming a drawn obj ect by performing drawing on a recording medium in which a plurality of coloring layers is stacked via an intermediate layer, the plurality of coloring layers each including a coloring compound different from each other and a photothermal conversion agent different from each other, the method comprising:

generating a plurality of laser beams each having a wavelength different from each other, the wavelength corresponding to an absorption wavelength of the photothermal conversion agent; and
performing drawing on the recording medium by irradiating a surface of the recording medium with the plurality of laser beams generated by the light source section and also by scanning the plurality of laser beams over the surface of the recording medium; wherein
the generating the plurality of laser beams comprising generating at least one laser beam among the plurality of laser beams to cause a beam shape of the at least one laser beam at a position of the recording medium to satisfy a relational expression below, and to cause a length of the beam shape in a direction parallel to a scanning direction of the laser beams to be 0 degrees or more and 20 degrees or less with respect to the scanning direction of the laser beams:

(Expression)

$$Ly \times 1.1 \leq Lx < Ly \times 5.0$$

$$d \times 0.8 \leq Ly \leq d \times 1.3$$

Lx: Length of the beam shape in a direction parallel to the scanning direction of the laser beams
Ly: Length of the beam shape in a direction orthogonal to the scanning direction of the laser beams
d: Pixel size.

[ FIG. 1 ]

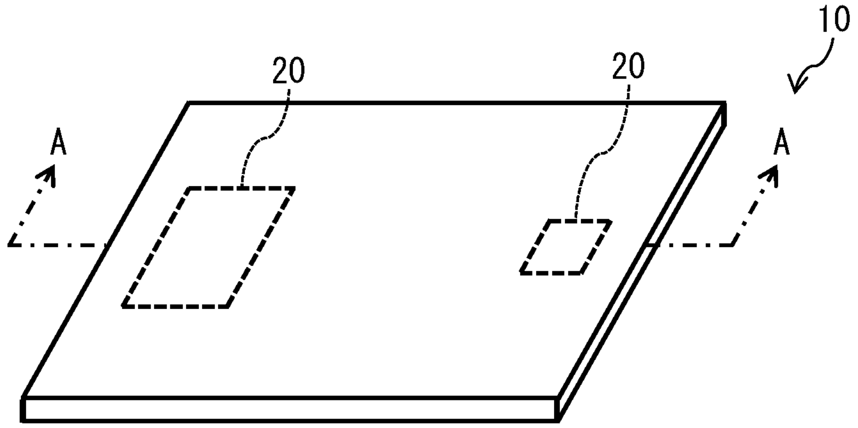


[ FIG. 2 ]

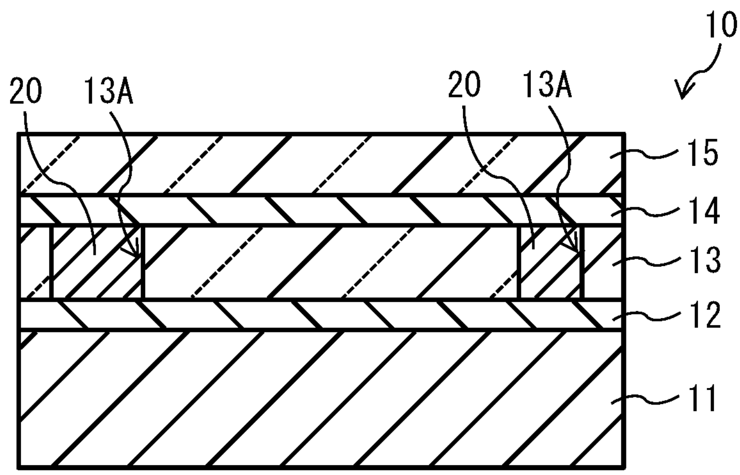

[ FIG. 3 ]

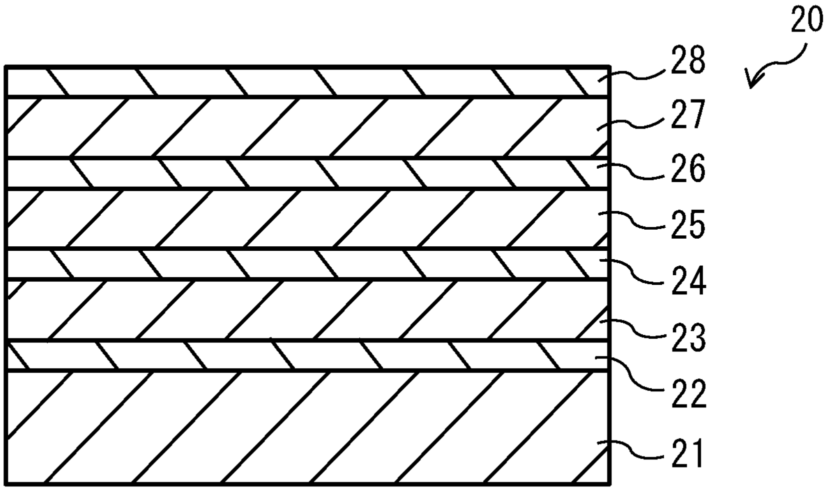


[ FIG. 4 ]

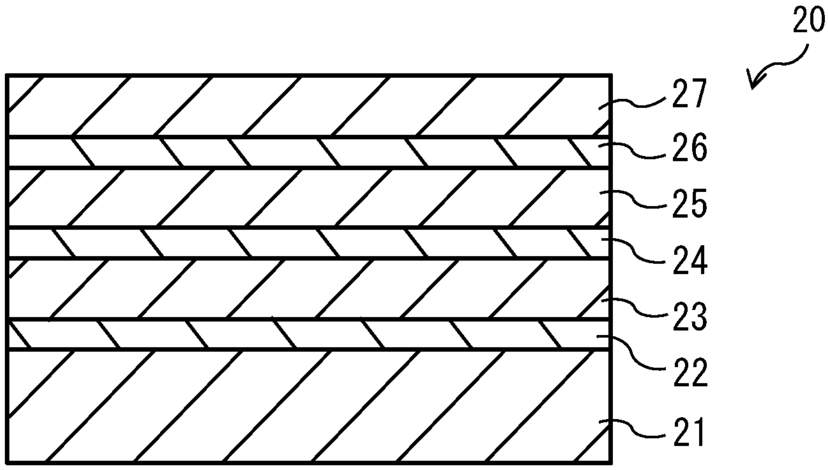

[ FIG. 5 ]

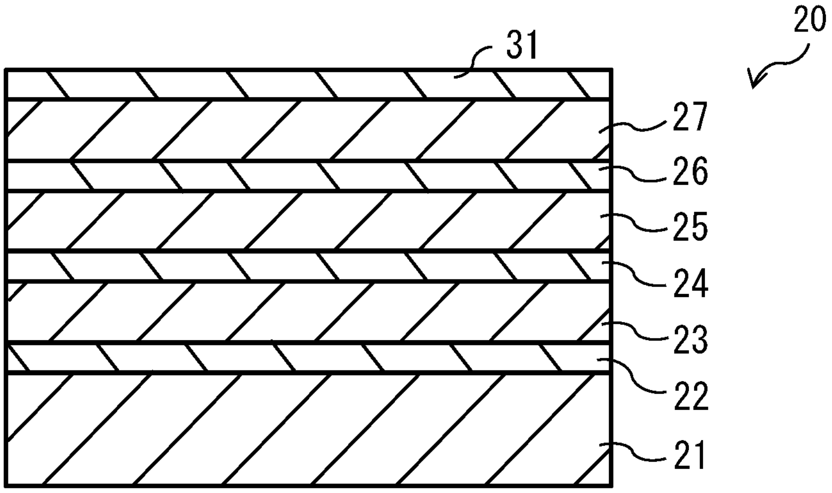


[ FIG. 6 ]

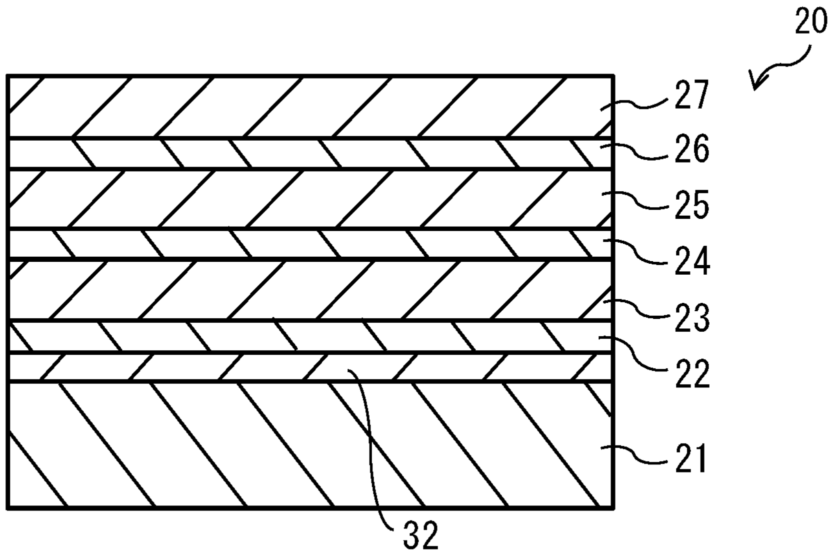

[ FIG. 7 ]

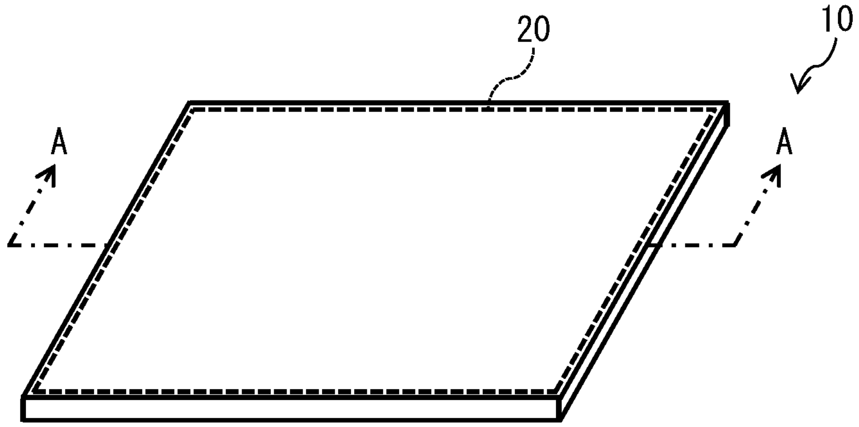


[ FIG. 8 ]

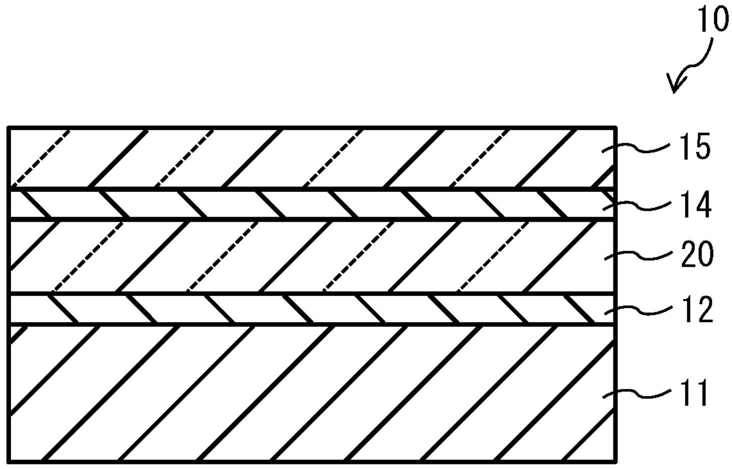

[ FIG. 9 ]

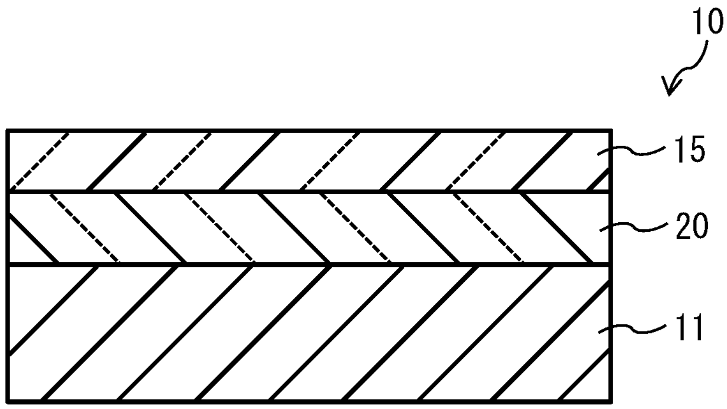


[ FIG. 10 ]

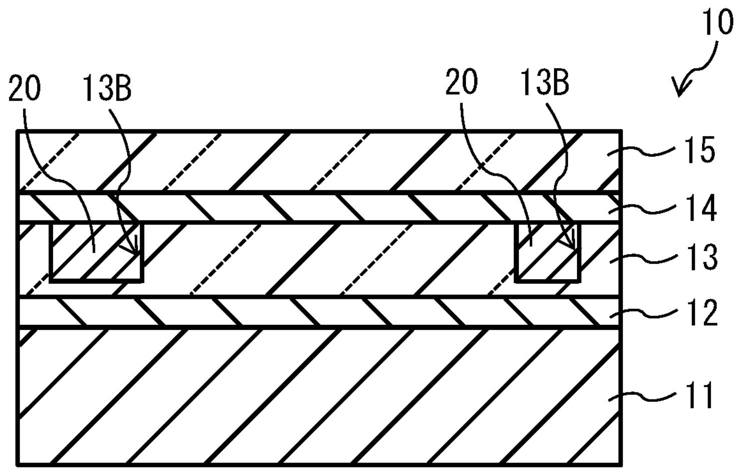

[ FIG. 11 ]

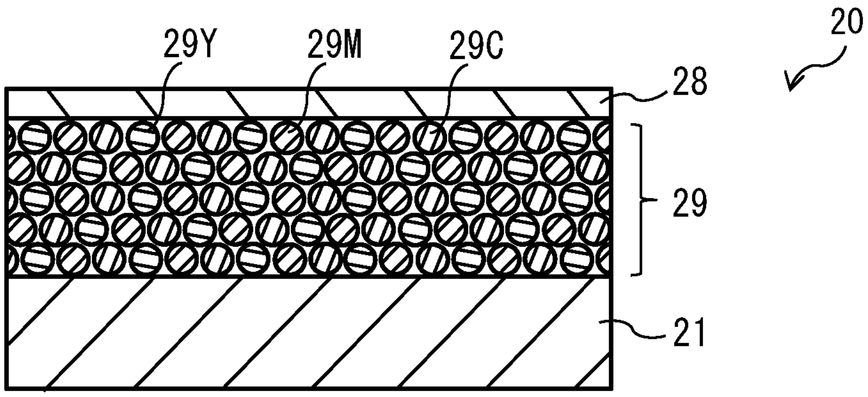

[ FIG. 12 ]

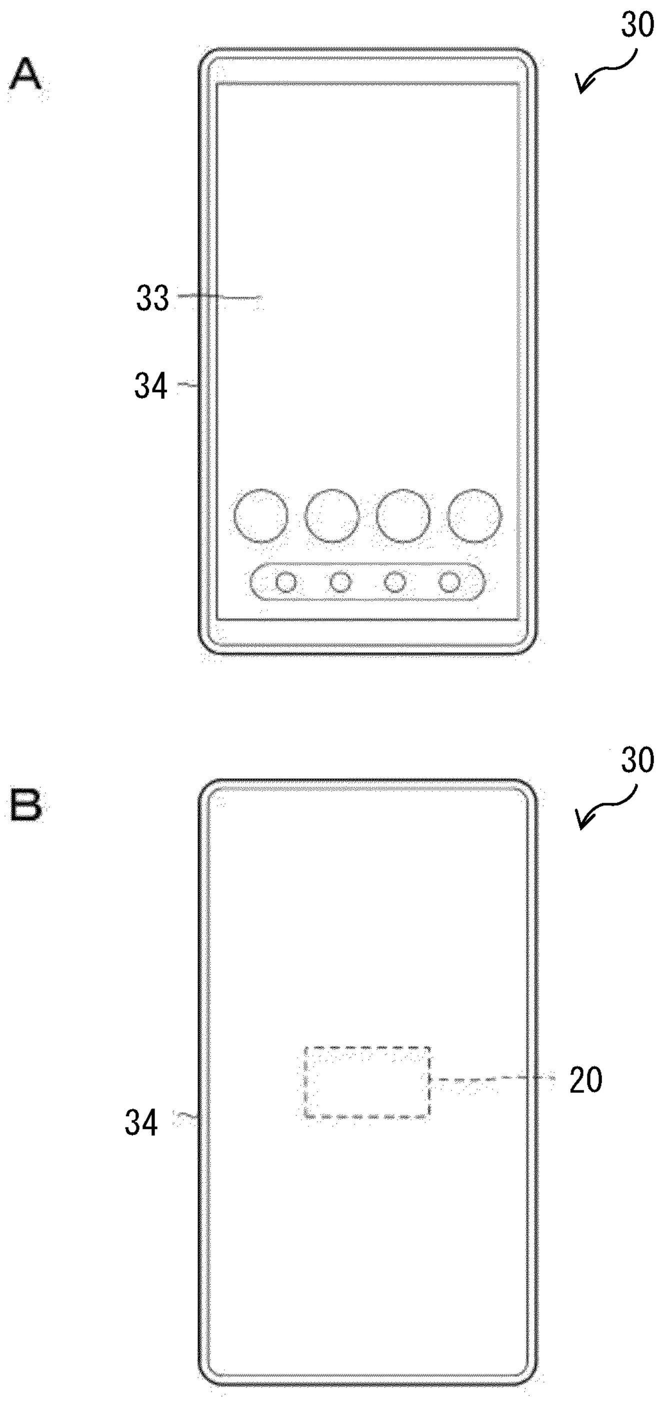

[ FIG. 13 ]

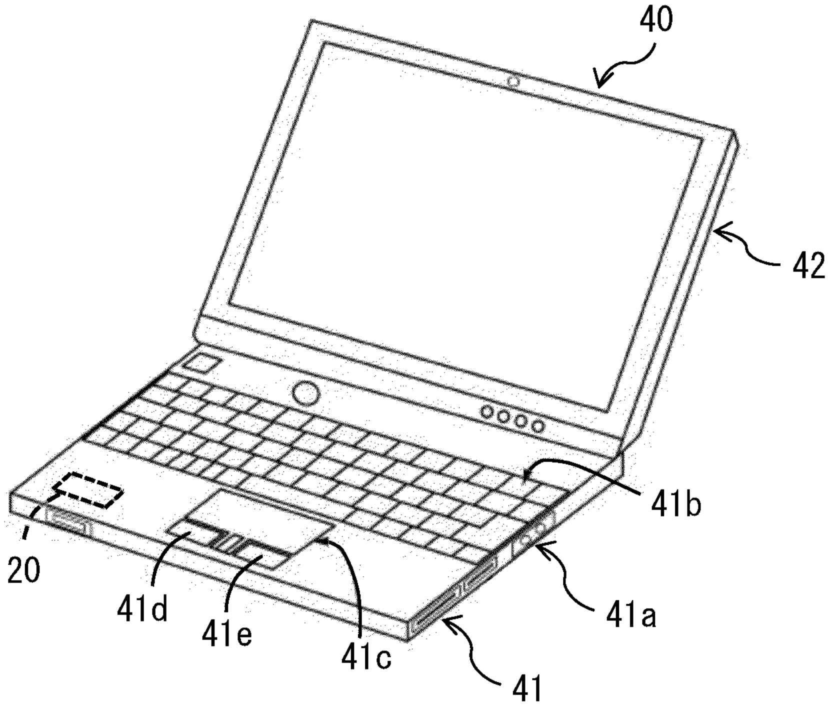

[ FIG. 14 ]

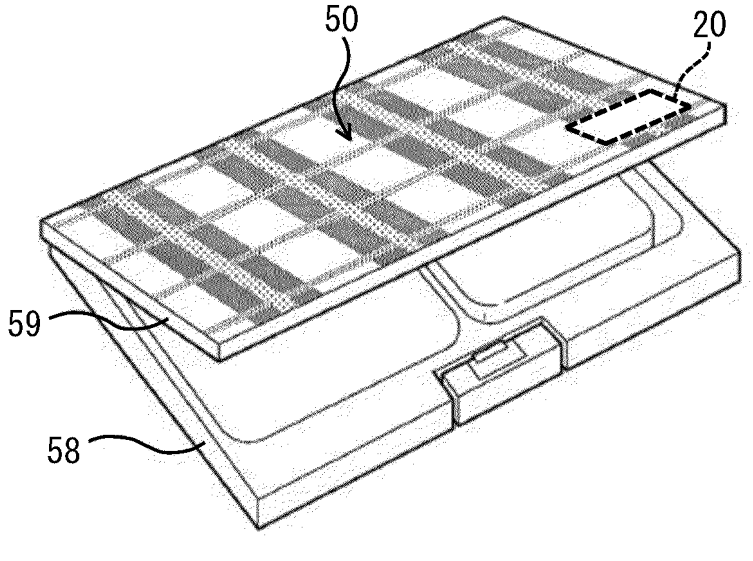

[ FIG. 15 ]

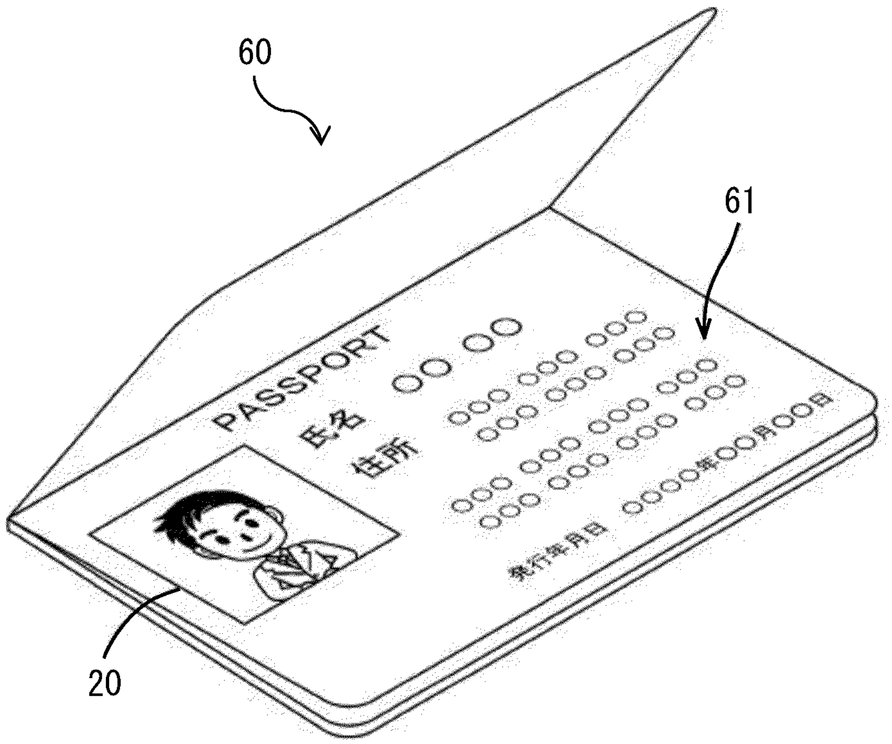

[ FIG. 16 ]

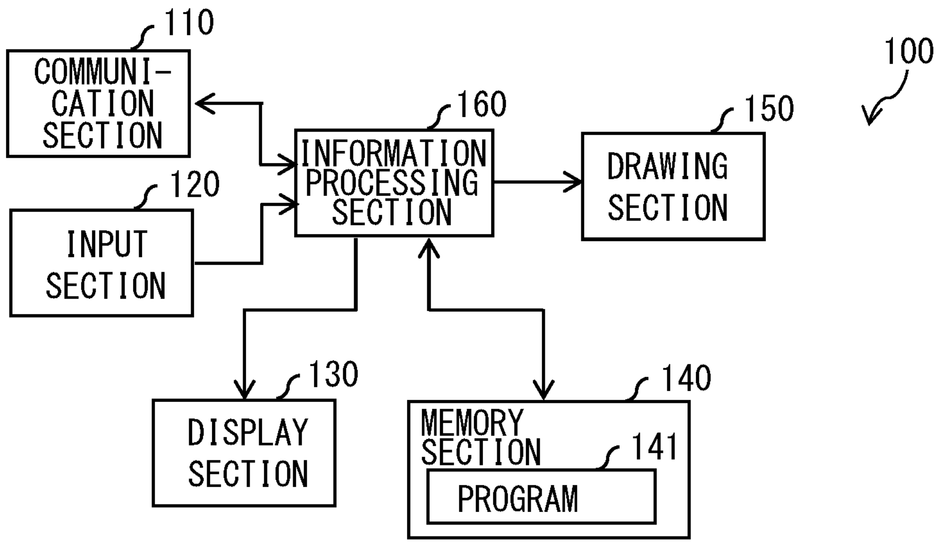
110
COMMUNI-CATION SECTION
120
INPUT SECTION
160
INFORMATION PROCESSING SECTION
150
DRAWING SECTION
100
130
DISPLAY SECTION
140
MEMORY SECTION
141
PROGRAM

[ FIG. 17 ]

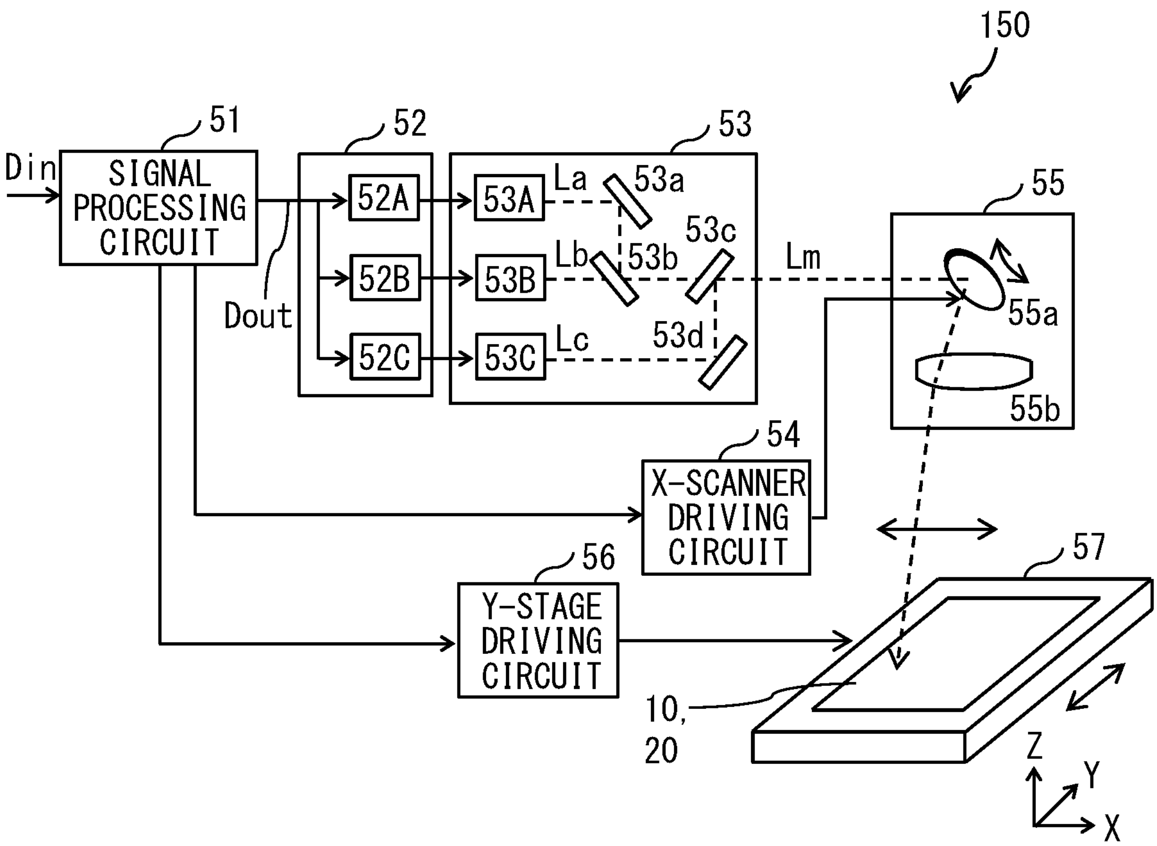
150
Din
51
SIGNAL PROCESSING CIRCUIT
52
52A
52B
52C
Dout
53
53A
53B
53C
La
Lb
Lc
53a
53b
53c
53d
Lm
55
55a
55b
54
X-SCANNER DRIVING CIRCUIT
56
Y-STAGE DRIVING CIRCUIT
57
10,
20
Z
Y
X

[ FIG. 18 ]

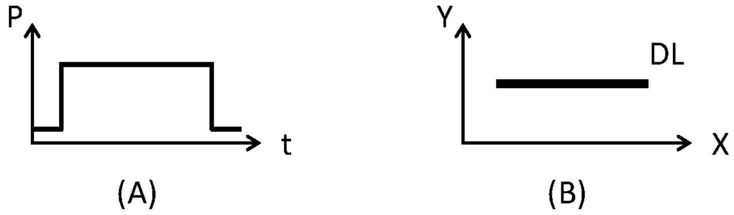


[ FIG. 19 ]

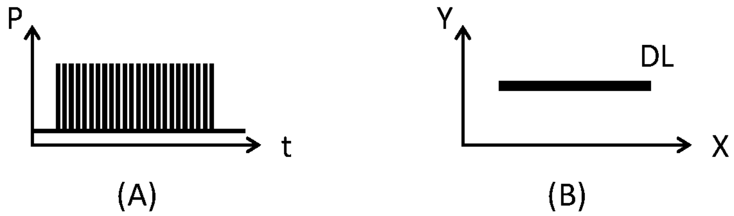


[ FIG. 20 ]

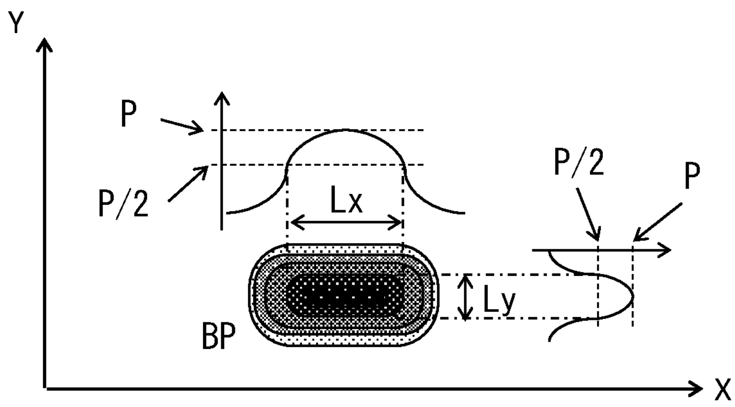

[ FIG. 21 ]

| | | Lx (LONG-AXIS LENGTH) [μm] | | |
|---|---|---|---|---|
| | | <Ly*1.1 | Ly*1.1~ Ly*5.0 | Ly*5.0< |
| Ly (SHORT-AXIS LENGTH) [μm] | <d*0.8 | BURNING | INSUFFICIENT OPTICAL DENSITY (NARROW LINEWIDTH) | INSUFFICIENT OPTICAL DENSITY (REDUCED POWER DENSITY) |
| | d*0.8~ d*1.3 | BURNING, CROSSTALK | GOOD | INSUFFICIENT OPTICAL DENSITY (REDUCED POWER DENSITY) |
| | d*1.3< | REDUCED DRAWING QUALITY (REDUCED RESOLUTION) | INSUFFICIENT OPTICAL DENSITY (REDUCED POWER DENSITY) | INSUFFICIENT OPTICAL DENSITY (REDUCED POWER DENSITY) |

d: PIXEL SIZE

[ FIG. 22 ]

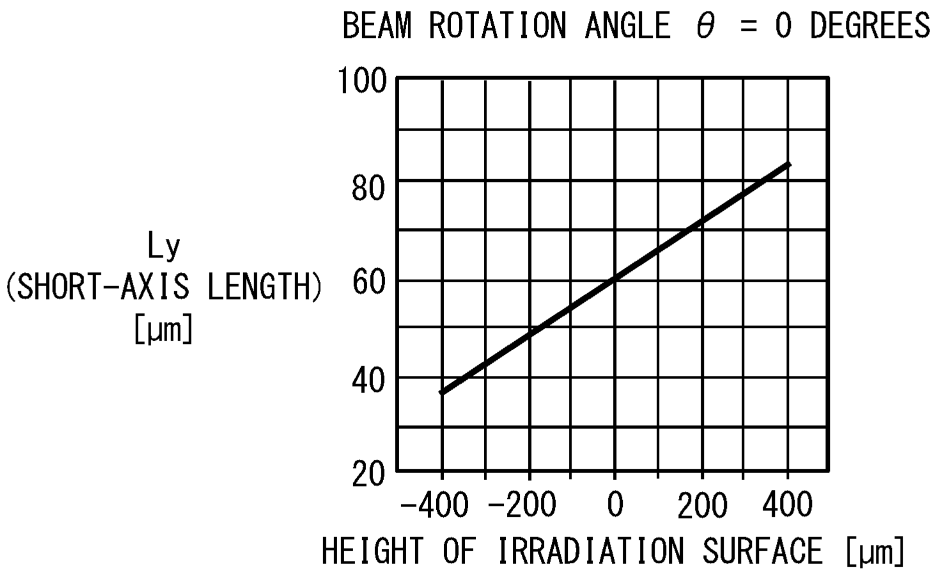

[ FIG. 23 ]

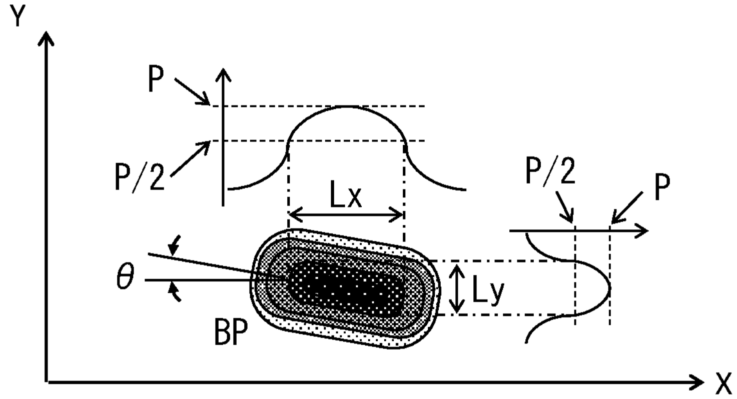
Y
P
P/2
Lx
P/2
P
θ
Ly
BP
X

[ FIG. 24 ]

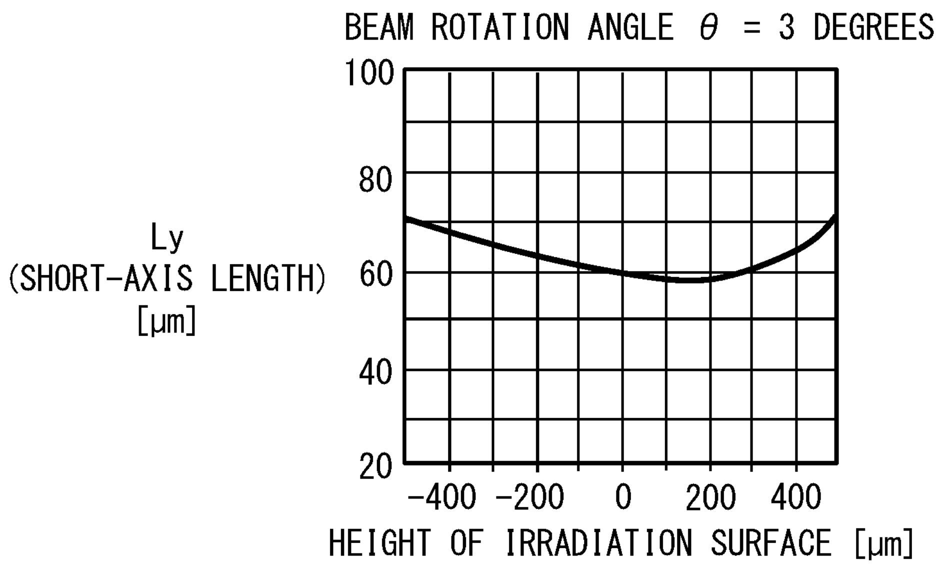
BEAM ROTATION ANGLE θ = 3 DEGREES
Ly
(SHORT-AXIS LENGTH)
[μm]
100
80
60
40
20
-400 -200 0 200 400
HEIGHT OF IRRADIATION SURFACE [μm]

[ FIG. 25 ]

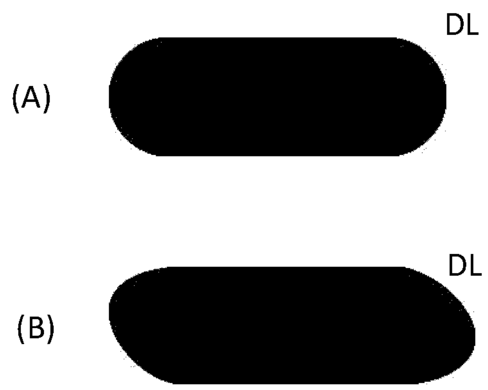

[ FIG. 26 ]

| TEST NO. | TARGET RESOLUTION [dpi] | TARGET LINE-WIDTH [μm] | Lx [μm] | Ly [μm] | θ [μm] | MAXIMUM OD VALUE 1.0 OR MORE | CROSS-TALK | DOF [μm] | |
|---|---|---|---|---|---|---|---|---|---|
| 1 | 423 | 60 | 60 | 60 | 3 | × | YES | >500 | |
| 2 | 423 | 60 | 90 | 60 | 3 | ○ | NO | >500 | 「GOOD」 |
| 3 | 423 | 60 | 120 | 60 | 3 | ○ | NO | >500 | |
| 4 | 423 | 60 | 240 | 60 | 3 | ○ | NO | >500 | |
| 5 | 423 | 60 | 360 | 60 | 3 | × | NO | >500 | |
| 6 | 423 | 60 | 90 | 40 | 3 | × | YES | >500 | |
| 7 | 423 | 60 | 90 | 50 | 3 | × | YES | >500 | |
| 8 | 423 | 60 | 90 | 70 | 3 | ○ | NO | >500 | 「GOOD」 |
| 9 | 423 | 60 | 90 | 80 | 3 | × | NO | >500 | |
| 10 | 423 | 60 | 90 | 60 | 0 | ○ | NO | >100 | 「GOOD」 |
| 11 | 423 | 60 | 90 | 60 | 0.5 | ○ | NO | >200 | |
| 12 | 423 | 60 | 90 | 60 | 1 | ○ | NO | >500 | |
| 13 | 423 | 60 | 90 | 60 | 5 | ○ | NO | >500 | |
| 14 | 423 | 60 | 90 | 60 | 10 | ○ | NO | >500 | |
| 15 | 423 | 60 | 90 | 60 | 20 | ○ | NO | >300 | |
| 16 | 423 | 60 | 90 | 60 | 30 | × | NO | >100 | |
| 17 | 508 | 50 | 50 | 60 | 3 | × | YES | >500 | |
| 18 | 508 | 50 | 70 | 60 | 3 | ○ | NO | >500 | 「GOOD」 |
| 19 | 508 | 50 | 100 | 60 | 3 | ○ | NO | >500 | |
| 20 | 508 | 50 | 200 | 60 | 3 | ○ | NO | >500 | |
| 21 | 508 | 50 | 300 | 60 | 3 | × | NO | >500 | |
| 22 | 508 | 50 | 70 | 30 | 3 | × | YES | >500 | |
| 23 | 508 | 50 | 70 | 40 | 3 | ○ | NO | >500 | 「GOOD」 |
| 24 | 508 | 50 | 70 | 70 | 3 | × | NO | >500 | |

[ FIG. 27 ]

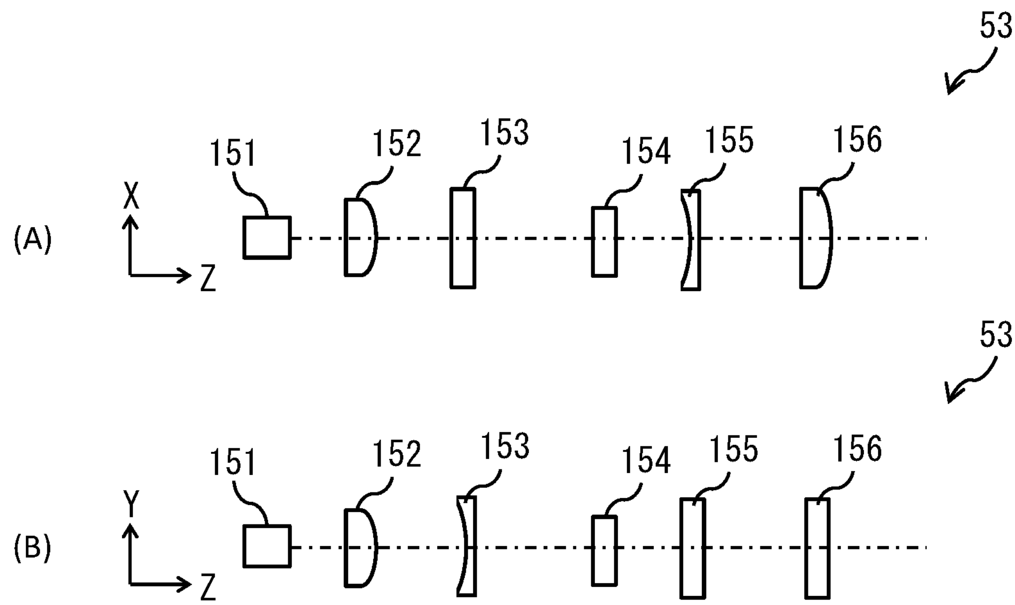


[ FIG. 28 ]

| | FOCAL LENGTH [mm] | Z-AXIS ROTATION | | | |
|---|---|---|---|---|---|
| | | EXAMPLE 1 | EXAMPLE 2 | EXAMPLE 3 | EXAMPLE 4 |
| 151 | | −2. 3° | | | −2. 0° |
| 152 | 8 | | | | |
| 153 | −150 (Y-DIRECTION) | | | −3. 0° | +1. 0° |
| 154 | 200 (Y-DIRECTION) | | +0. 7° | | |
| 155 | −50 (X-DIRECTION) | | | −1. 0° | |
| 156 | 200 (X-DIRECTION) | | +0. 7° | | |

[ FIG. 29 ]

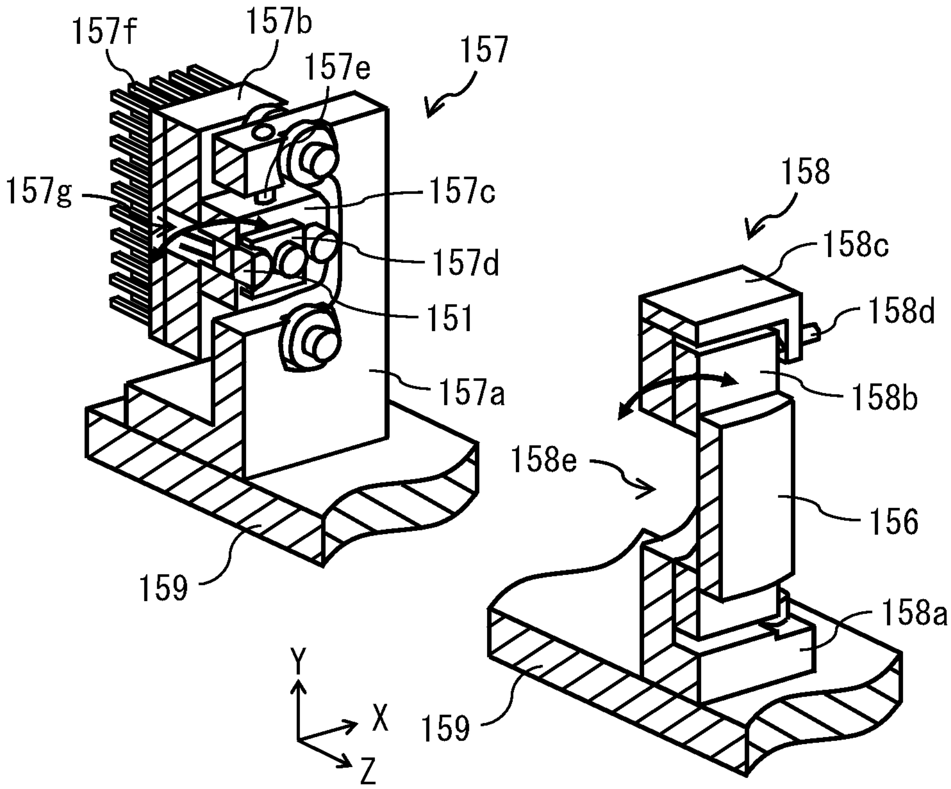
157f
157b
157e
157
157g
157c
157d
151
157a
159
158
158c
158d
158b
158e
156
158a
159
Y
X
Z

[ FIG. 30 ]

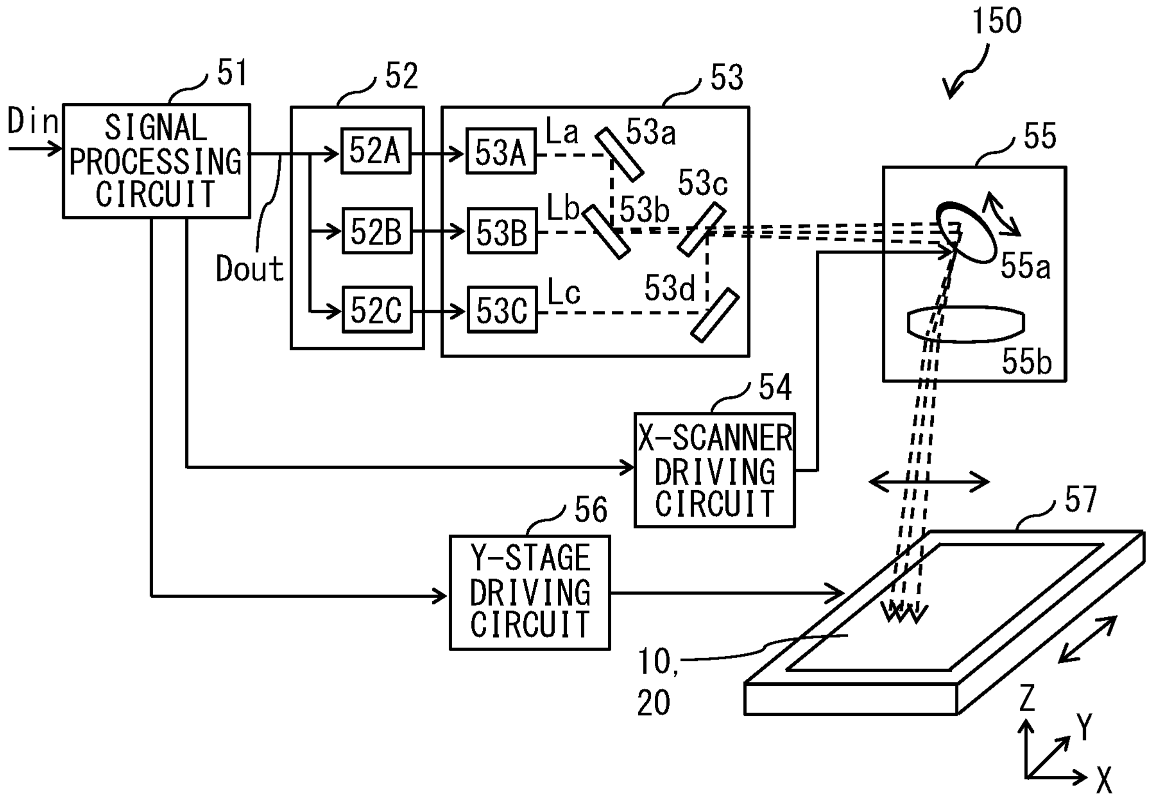
150
51
52
53
55
Din
SIGNAL PROCESSING CIRCUIT
52A
52B
52C
53A
53B
53C
La
Lb
Lc
53a
53b
53c
53d
55a
55b
Dout
54
X-SCANNER DRIVING CIRCUIT
56
Y-STAGE DRIVING CIRCUIT
57
10, 20
Z
Y
X

[ FIG. 31 ]

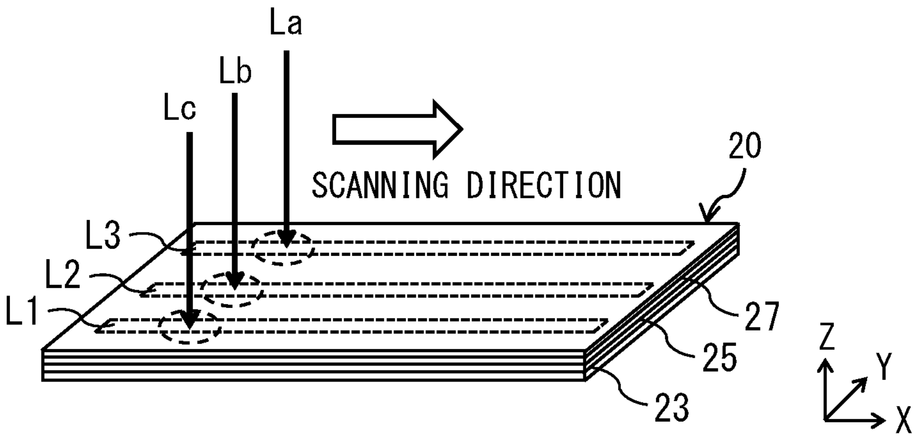
La
Lb
Lc
SCANNING DIRECTION
20
L3
L2
L1
27
25
23
Z
Y
X

[ FIG. 32 ]

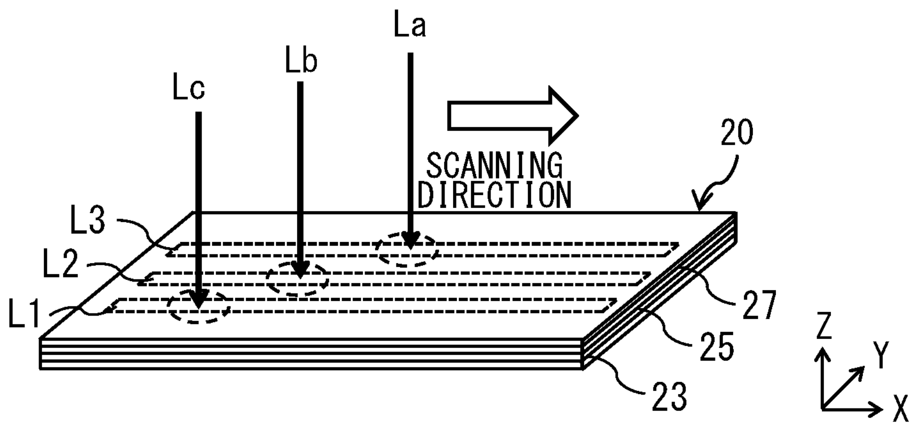
La
Lb
Lc
SCANNING
DIRECTION
20
L3
L2
L1
27
25
23
Z
Y
X

[ FIG. 33 ]

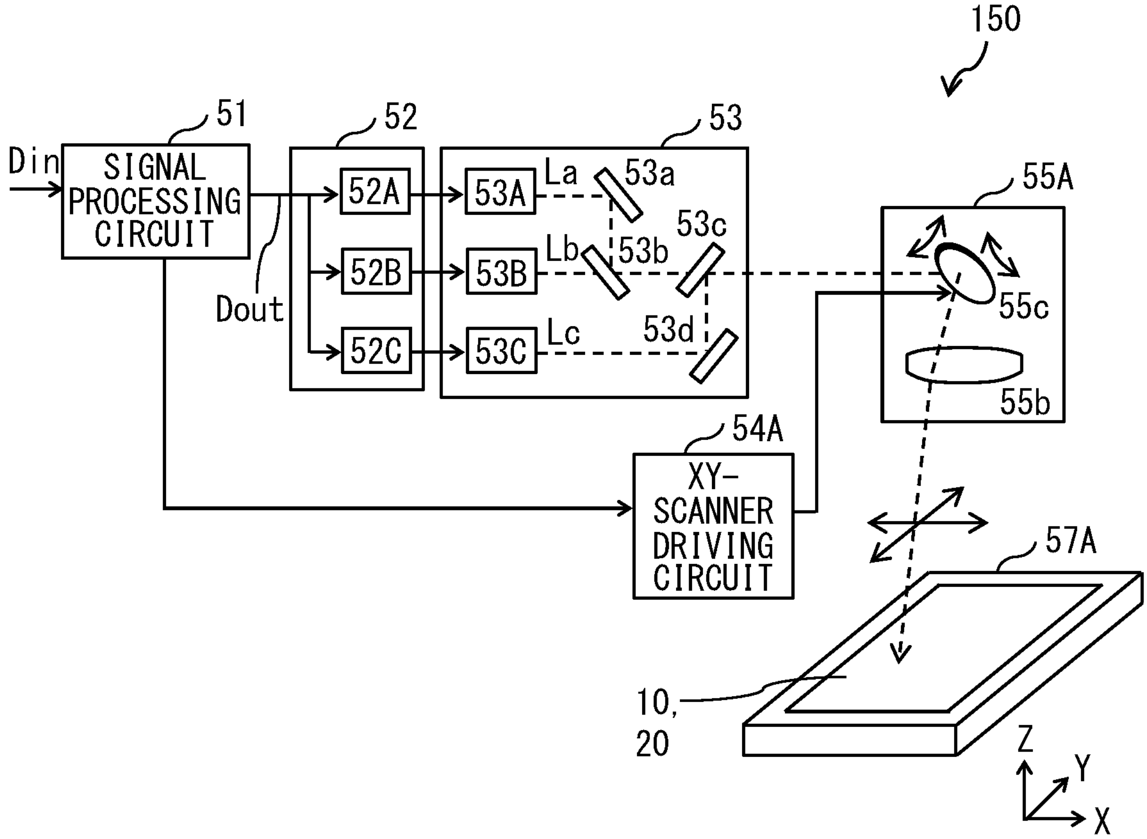
150
51
52
53
Din
SIGNAL PROCESSING CIRCUIT
Dout
52A
52B
52C
53A
53B
53C
La
Lb
Lc
53a
53b
53c
53d
55A
55c
55b
54A
XY-SCANNER DRIVING CIRCUIT
57A
10, 20
Z
Y
X

[ FIG. 34 ]

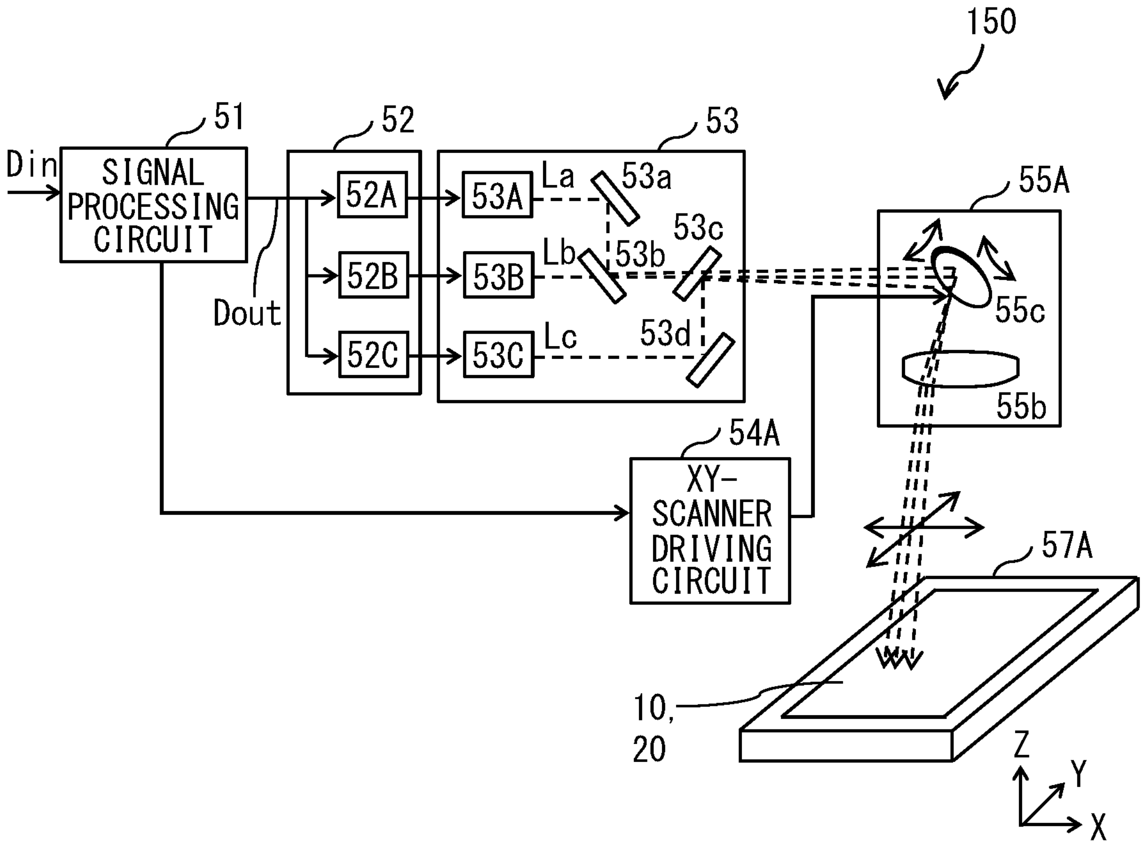

150
51
52
53
Din
SIGNAL PROCESSING CIRCUIT
Dout
52A
52B
52C
53A
53B
53C
La
Lb
Lc
53a
53b
53c
53d
55A
55c
55b
54A
XY-SCANNER DRIVING CIRCUIT
57A
10,
20
Z
Y
X

**INTERNATIONAL SEARCH REPORT**

International application No.
**PCT/JP2023/033411**

**A. CLASSIFICATION OF SUBJECT MATTER**

***G11B 7/0045***(2006.01)i; ***B41J 2/47***(2006.01)i; ***B41J 2/475***(2006.01)i; ***B42D 25/21***(2014.01)i; ***B42D 25/41***(2014.01)i; ***G03F 7/20***(2006.01)i; ***G11B 7/0033***(2006.01)i; ***G11B 7/126***(2012.01)i; ***G11B 7/1263***(2012.01)i; ***G11B 7/135***(2012.01)i; ***G11B 7/1362***(2012.01)i; ***G11B 7/24012***(2013.01)i; ***G11B 7/24041***(2013.01)i; ***G11B 7/24094***(2013.01)i; ***G11B 7/244***(2006.01)i

FI: G11B7/0045 A; B41J2/47 101Z; B41J2/475 Z; B42D25/21; B42D25/41; G03F7/20 505; G11B7/0033; G11B7/126; G11B7/1263; G11B7/135; G11B7/1362; G11B7/24012; G11B7/24041; G11B7/24094; G11B7/244

According to International Patent Classification (IPC) or to both national classification and IPC

**B. FIELDS SEARCHED**

Minimum documentation searched (classification system followed by classification symbols)

G11B7/0045; B41J2/47; B41J2/475; B42D25/21; B42D25/41; G03F7/20; G11B7/0033; G11B7/126; G11B7/1263; G11B7/135; G11B7/1362; G11B7/24012; G11B7/24041; G11B7/24094; G11B7/244

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-192015 A (RICOH CO., LTD.) 02 September 2010 (2010-09-02) claims 1-6, fig. 1-7 | 1-10 |
| A | JP 2003-043397 A (NORITSU KOKI CO., LTD.) 13 February 2003 (2003-02-13) claim 4, paragraphs [0019], [0020], [0071]-[0074], fig. 3, 5 | 1-10 |
| A | JP 2008-230221 A (TOSHIBA TEC CORP.) 02 October 2008 (2008-10-02) fig. 1, 4-6 | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/033411**

| Patent document cited in search report | Publication date (day/month/year) | Patent family member(s) | Publication date (day/month/year) |
|---|---|---|---|
| JP 2010-192015 A | 02 September 2010 | (Family: none) | |
| JP 2003-043397 A | 13 February 2003 | (Family: none) | |
| JP 2008-230221 A | 02 October 2008 | US 2008/0123509 A1<br>fig. 1, 4-6<br>EP 1925458 A1<br>CN 101190611 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010192015 A
- JP 2005144952 A
- JP 5292274 A
- JP 2022171761 A